# EUROPEAN PATENT APPLICATION

(11) **EP 4 700 425 A2**
(43) Date of publication of application: **25.02.2026**
(21) Application number: 26151537.3
(22) Date of filing: 20.12.2022
(51) Int. Cl.: G01S 7/02

(54) **NETWORK-ASSISTED COORDINATION FOR MULTI-RADAR INTERFERENCE**

(30) Priority: 10.01.2022 GR 20220100019
(62) Divisional of application: 22850986.5
(71) Applicant: QUALCOMM Incorporated, San Diego, CA 92121-1714 (US)
(72) Inventor: STEFANATOS, Stelios, San Diego, California, 92121-1714 (US); PATIL, Shailesh, San Diego, California, 92121-1714 (US); GULATI, Kapil, San Diego, California, 92121-1714 (US); GUBESKYS, Arthur, San Diego, California, 92121-1714 (US); ASHOUR, Mahmoud, San Diego, California, 92121-1714 (US); KUMARI, Preeti, San Diego, California, 92121-1714 (US); LI, Junyi, San Diego, California, 92121-1714 (US); BALASUBRAMANIAN, Anantharaman, San Diego, California, 92121-1714 (US); MARSH, Gene Wesley, San Diego, California, 92121-1714 (US)
(74) Representative: Haug, Ralf

(57) **Abstract**

Methods, systems, and devices for wireless communications are described. A user equipment (UE) may include a radar which is used for object detection, such as a vehicle UE detecting other vehicle UEs in a vehicle-to-everything (V2X) communications system. The UE may be configured for coordinated interference, where radars transmit a common waveform while applying different delays to prevent negative co-channel interference effects, such as false or ghost targets. The techniques described herein support configuring a common configuration for network-assisted coordinated interference by considering capabilities of UEs and radars within a geographic area controlled by a network entity. The network entity may identify and indicate a waveform configuration which is used by radars within the geographic control area of the network entity.

## Description

### FIELD OF TECHNOLOGY

The following relates to wireless communications, including network-assisted coordination for multi-radar interference.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In a vehicle-to-everything (V2X) communications systems, some vehicles may be equipped with radars for object or vehicle detection. A radar equipped to a vehicle may transmit a signal, and the radar may monitor for reflections of the transmitted signal to detect nearby targets. In some cases, there may be interference between radars if there are multiple nearby vehicles equipped with radars. Current techniques for managing or mitigating interference between radars may be deficient.

### SUMMARY

The described techniques relate to improved methods, systems, devices, and apparatuses that support network-assisted coordination for multi-radar interference. Generally, the described techniques provide for configuring a common configuration for a radar waveform which is transmitted by a user equipment (UE) in a coordinated interference scheme. A UE may include or be equipped with a radar which is used for object detection, such as a vehicle UE detecting other vehicle UEs in a vehicle-to-everything (V2X) communications system. The UE may be configured for coordinated interference, where radars transmit a common waveform while applying different delays to prevent negative co-channel interference effects, such as false alarms or ghost targets. The techniques described herein support configuring a common configuration for network-assisted coordinated interference by considering capabilities of UEs and radars within a geographic area controlled by a network entity. For example, a UE may report capabilities of a radar of the UE. The network entity may receive the capability report from the UE as well as other UEs within a geographic control area of the network entity. The network entity may identify a radar configuration which is supported by a group of UEs within the geographic control area and indicate the radar configuration to the group of UEs. The UEs may then transmit radar waveforms in accordance with the radar configuration in order to perform coordinated interference.

A method for wireless communications at a UE is described. The method may include transmitting a message indicating a radar waveform generation capability of the UE, receiving, from a network entity, control signaling indicating values for one or more radar waveform generation parameters common to a group of UEs including the UE associated with a geographic control area of the network entity in response to transmitting the message indicating the radar waveform generation capability of the UE, and transmitting a radar waveform in accordance with the values for the one or more radar waveform generation parameters.

An apparatus for wireless communications at a UE is described. The apparatus may include a processor, memory coupled with the processor, and instructions stored in the memory. The instructions may be executable by the processor to cause the apparatus to transmit a message indicating a radar waveform generation capability of the UE, receive, from a network entity, control signaling indicating values for one or more radar waveform generation parameters common to a group of UEs including the UE associated with a geographic control area of the network entity in response to transmitting the message indicating the radar waveform generation capability of the UE, and transmit a radar waveform in accordance with the values for the one or more radar waveform generation parameters.

Another apparatus for wireless communications at a UE is described. The apparatus may include means for transmitting a message indicating a radar waveform generation capability of the UE, means for receiving, from a network entity, control signaling indicating values for one or more radar waveform generation parameters common to a group of UEs including the UE associated with a geographic control area of the network entity in response to transmitting the message indicating the radar waveform generation capability of the UE, and means for transmitting a radar waveform in accordance with the values for the one or more radar waveform generation parameters.

A non-transitory computer-readable medium storing code for wireless communications at a UE is described. The code may include instructions executable by a processor to transmit a message indicating a radar waveform generation capability of the UE, receive, from a network entity, control signaling indicating values for one or more radar waveform generation parameters common to a group of UEs including the UE associated with a geographic control area of the network entity in response to transmitting the message indicating the radar waveform generation capability of the UE, and transmit a radar waveform in accordance with the values for the one or more radar waveform generation parameters.

In some examples of the method, apparatuses, and non-transitory computer-readable medium described herein, transmitting the message may include operations, features, means, or instructions for transmitting the message indicating values for a set of radar waveform generation capabilities supported by the UE, where the control signaling indicates the values for the one or more radar waveform generation parameters common to the group of UEs based on the values for the set of radar waveform generation capabilities.

In some examples of the method, apparatuses, and non-transitory computer-readable medium described herein, transmitting the message may include operations, features, means, or instructions for transmitting the message indicating whether the UE may be capable of applying a frame delay to the radar waveform.

In some examples of the method, apparatuses, and non-transitory computer-readable medium described herein, transmitting the message may include operations, features, means, or instructions for transmitting the message indicating a capability to support one or more radar waveform configurations of a set of multiple radar waveform configurations, where the control signaling indicates a first radar waveform configuration including the values for the one or more radar waveform generation parameters of the set of multiple radar waveform configurations.

In some examples of the method, apparatuses, and non-transitory computer-readable medium described herein, transmitting the message may include operations, features, means, or instructions for transmitting the message indicating the radar waveform generation capability of the UE periodically, based on a geo-location of the UE, or both.

Some examples of the method, apparatuses, and non-transitory computer-readable medium described herein may further include operations, features, means, or instructions for receiving, from the network entity, a broadcast signal and transmitting the message to the network entity based on receiving the broadcast signal.

In some examples of the method, apparatuses, and non-transitory computer-readable medium described herein, the broadcast signal triggers the UE to transmit the message based on the UE entering the geographic control area of the network entity.

Some examples of the method, apparatuses, and non-transitory computer-readable medium described herein may further include operations, features, means, or instructions for receiving an indication of one or more updated radar waveform generation parameters and transmitting a second radar waveform in accordance with at least the one or more updated radar waveform generation parameters.

Some examples of the method, apparatuses, and non-transitory computer-readable medium described herein may further include operations, features, means, or instructions for receiving the control signaling indicating the values for the one or more radar waveform generation parameters periodically, or based on a change to the values for the one or more radar waveform generation parameters common to the group of UEs, or both.

Some examples of the method, apparatuses, and non-transitory computer-readable medium described herein may further include operations, features, means, or instructions for initiating a timer based on detecting radio link failure and transmitting a second radar waveform using one or more default radar waveform generation parameters based on the timer expiring.

Some examples of the method, apparatuses, and non-transitory computer-readable medium described herein may further include operations, features, means, or instructions for initiating a timer based on detecting radio link failure and transmitting a second radar waveform using the values for the one or more radar waveform generation parameters based on the timer expiring.

Some examples of the method, apparatuses, and non-transitory computer-readable medium described herein may further include operations, features, means, or instructions for transmitting a second radar waveform with a reduced transmit power based on detecting radio link failure.

In some examples of the method, apparatuses, and non-transitory computer-readable medium described herein, receiving the control signaling may include operations, features, means, or instructions for receiving the control signaling including a frame delay indication for transmitting the radar waveform and transmitting the radar waveform in accordance with the frame delay indication.

Some examples of the method, apparatuses, and non-transitory computer-readable medium described herein may further include operations, features, means, or instructions for transmitting a request for radar waveform coordination based on detecting an interfering radar waveform, where the control signaling may be received in response to the request for radar waveform coordination.

A method for wireless communications at a network entity is described. The method may include receiving a set of multiple messages from a set of multiple UEs, each message indicating one or more radar waveform generation capabilities of a respective UE of the set of multiple UEs, selecting values for a set of one or more radar waveform generation parameters that are common to a group of UEs including at least a subset of the set of multiple UEs associated with a geographic control area of the network entity based on the set of multiple messages, and transmitting, to the group of UEs, control signaling indicating the values for the set of one or more radar waveform generation parameters common to the group of UEs.

An apparatus for wireless communications at a network entity is described. The apparatus may include a processor, memory coupled with the processor, and instructions stored in the memory. The instructions may be executable by the processor to cause the apparatus to receive a set of multiple messages from a set of multiple UEs, each message indicating one or more radar waveform generation capabilities of a respective UE of the set of multiple UEs, select values for a set of one or more radar waveform generation parameters that are common to a group of UEs including at least a subset of the set of multiple UEs associated with a geographic control area of the network entity based on the set of multiple messages, and transmit, to the group of UEs, control signaling indicating the values for the set of one or more radar waveform generation parameters common to the group of UEs.

Another apparatus for wireless communications at a network entity is described. The apparatus may include means for receiving a set of multiple messages from a set of multiple UEs, each message indicating one or more radar waveform generation capabilities of a respective UE of the set of multiple UEs, means for selecting values for a set of one or more radar waveform generation parameters that are common to a group of UEs including at least a subset of the set of multiple UEs associated with a geographic control area of the network entity based on the set of multiple messages, and means for transmitting, to the group of UEs, control signaling indicating the values for the set of one or more radar waveform generation parameters common to the group of UEs.

A non-transitory computer-readable medium storing code for wireless communications at a network entity is described. The code may include instructions executable by a processor to receive a set of multiple messages from a set of multiple UEs, each message indicating one or more radar waveform generation capabilities of a respective UE of the set of multiple UEs, select values for a set of one or more radar waveform generation parameters that are common to a group of UEs including at least a subset of the set of multiple UEs associated with a geographic control area of the network entity based on the set of multiple messages, and transmit, to the group of UEs, control signaling indicating the values for the set of one or more radar waveform generation parameters common to the group of UEs.

In some examples of the method, apparatuses, and non-transitory computer-readable medium described herein, receiving the set of multiple messages may include operations, features, means, or instructions for receiving, via a first message of the set of multiple messages, an indication of a capability to support one or more radar waveform configurations of a set of multiple radar waveform configurations, where the control signaling indicates a first radar waveform configuration including the values for the set of one or more radar waveform generation parameters of the set of multiple radar waveform configurations.

In some examples of the method, apparatuses, and non-transitory computer-readable medium described herein, receiving the set of multiple messages may include operations, features, means, or instructions for receiving the set of multiple messages from the set of multiple UEs periodically, based on respective geo-locations of the set of multiple UEs, or both.

Some examples of the method, apparatuses, and non-transitory computer-readable medium described herein may further include operations, features, means, or instructions for broadcasting a beacon signal associated with the geographic control area of the network entity and receiving, from a first UE of the set of multiple UEs, a first message of the set of multiple messages indicating that the first UE received the beacon signal.

Some examples of the method, apparatuses, and non-transitory computer-readable medium described herein may further include operations, features, means, or instructions for determining one or more updated radar waveform generation parameters that may be common to the group of UEs and transmitting an indication of the one or more updated radar waveform generation parameters to the group of UEs.

In some examples of the method, apparatuses, and non-transitory computer-readable medium described herein, transmitting the control signaling may include operations, features, means, or instructions for transmitting the control signaling indicating the values for the set of one or more radar waveform generation parameters according to a periodicity of the control signaling.

In some examples of the method, apparatuses, and non-transitory computer-readable medium described herein, selecting the values for the set of one or more radar waveform generation parameters may include operations, features, means, or instructions for selecting the values for the set of one or more radar waveform generation parameters based on a capability that may be common to each UE in the group of UEs.

Some examples of the method, apparatuses, and non-transitory computer-readable medium described herein may further include operations, features, means, or instructions for identifying a set of multiple sets of radar waveform generation parameters based on the set of multiple messages, where the values for the set of one or more radar waveform generation parameters may be selected from the set of multiple sets of radar waveform generation parameters based on a minimum capability of each UE in the group of UEs.

Some examples of the method, apparatuses, and non-transitory computer-readable medium described herein may further include operations, features, means, or instructions for selecting second values for a second set of one or more radar waveform generation parameters that may be common to a second group of UEs including at least a second subset of the set of multiple UEs based on the set of multiple messages, where the second group of UEs may be different from the group of UEs and transmitting, to the second group of UEs, second control signaling indicating the second values for the second set of one or more radar waveform generation parameters common to the second group of UEs.

In some examples of the method, apparatuses, and non-transitory computer-readable medium described herein, the group of UEs may be associated with a first radar waveform generation capability level, and the second group of UEs may be associated with a second radar waveform generation capability level.

Some examples of the method, apparatuses, and non-transitory computer-readable medium described herein may further include operations, features, means, or instructions for transmitting, to each UE of the group of UEs, an indication of a frame delay configuration for transmitting a radar waveform using the values for the set of one or more radar waveform generation parameters.

In some examples of the method, apparatuses, and non-transitory computer-readable medium described herein, transmitting the indication of the frame delay may include operations, features, means, or instructions for transmitting a groupcast message to the group of UEs, where the frame delay configuration for each UE of the group of UEs may be indicated based on a respective radar identifier for each UE.

Some examples of the method, apparatuses, and non-transitory computer-readable medium described herein may further include operations, features, means, or instructions for indicating a duration for the group of UEs to apply the values for the set of one or more radar waveform generation parameters common to the group of UEs.

Some examples of the method, apparatuses, and non-transitory computer-readable medium described herein may further include operations, features, means, or instructions for receiving, from one or more UEs of the set of multiple UEs, a request for radar waveform coordination, where the control signaling may be transmitted in response to the request for radar waveform coordination.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects and embodiments are described in this application by illustration to some examples, those skilled in the art will understand that additional implementations and use cases may come about in many different arrangements and scenarios. Innovations described herein may be implemented across many differing platform types, devices, systems, shapes, sizes, packaging arrangements. For example, embodiments and/or uses may come about via integrated chip embodiments and other non-module-component based devices (e.g., end-user devices, vehicles, communication devices, computing devices, industrial equipment, retail/purchasing devices, medical devices, artificial intelligence (AI)-enabled devices, etc.). While some examples may or may not be specifically directed to use cases or applications, a wide assortment of applicability of described innovations may occur. Implementations may range in spectrum from chip-level or modular components to non-modular, non-chip-level implementations and further to aggregate, distributed, or original equipment manufacturer (OEM) devices or systems incorporating one or more aspects of the described innovations. In some practical settings, devices incorporating described aspects and features may also necessarily include additional components and features for implementation and practice of claimed and described embodiments. For example, transmission and reception of wireless signals necessarily includes a number of components for analog and digital purposes (e.g., hardware components including antenna, radio frequency (RF)-chains, power amplifiers, modulators, buffer, processor(s), interleaver, adders/summers, etc.). It is intended that innovations described herein may be practiced in a wide variety of devices, chip-level components, systems, distributed arrangements, end-user devices, etc. of varying sizes, shapes, and constitution.

### BRIEF DESCRIPTION OF THE DRAWINGS

FIG. 1 illustrates an example of a wireless communications system that supports network-assisted coordination for multi-radar interference in accordance with aspects of the present disclosure.
FIG. 2 illustrates an example of a wireless communications system that supports network-assisted coordination for multi-radar interference in accordance with aspects of the present disclosure.
FIG. 3 illustrates an example of a wireless communications system that supports network-assisted coordination for multi-radar interference in accordance with aspects of the present disclosure.
FIG. 4 illustrates an example of a process flow that supports network-assisted coordination for multi-radar interference in accordance with aspects of the present disclosure.
FIGs. 5 and 6 show block diagrams of devices that support network-assisted coordination for multi-radar interference in accordance with aspects of the present disclosure.
FIG. 7 shows a block diagram of a communications manager that supports network-assisted coordination for multi-radar interference in accordance with aspects of the present disclosure.
FIG. 8 shows a diagram of a system including a device that supports network-assisted coordination for multi-radar interference in accordance with aspects of the present disclosure.
FIGs. 9 and 10 show block diagrams of devices that support network-assisted coordination for multi-radar interference in accordance with aspects of the present disclosure.
FIG. 11 shows a block diagram of a communications manager that supports network-assisted coordination for multi-radar interference in accordance with aspects of the present disclosure.
FIG. 12 shows a diagram of a system including a device that supports network-assisted coordination for multi-radar interference in accordance with aspects of the present disclosure.
FIGs. 13 through 16 show flowcharts illustrating methods that support network-assisted coordination for multi-radar interference in accordance with aspects of the present disclosure.

### DETAILED DESCRIPTION

In a vehicle-to-everything (V2X) communications systems, a user equipment (UE) such as a vehicular UE (V-UE), may be equipped with a radar to detect objects or other vehicles. For example, the radar may transmit a waveform which is reflected off another vehicle, and the V-UE may determine location information for the other vehicle based on the reflected signal. As the number of radar-equipped vehicles increases, there is also an increased chance of multi-radar interference. For example, a direct radar waveform from an interferer may appear as a reflected signal, creating a ghost target or false alarm. Some systems implement techniques for coordinated interference, where all mutually interfering radars transmit a common waveform, but each radar applies an independent delay at the start of each frame. By performing additional filtering and processing, these coordinated interference techniques may support a V-UE to detect and discard ghost targets and other multi-radar interferences. However, an area may have V-UEs with different capabilities, as well as the area having multiple V-UEs entering or leaving frequently. However, for coordinated interference techniques to be effective, V-UEs may need to use a common configuration except for the device-specific frame delay.

The present disclosure provides techniques for configuring and maintaining a common configuration for coordinated multi-radar interference. A network entity, such as a roadside unit (RSU) or a base station, may identify a set of radar waveform generation parameters which are used by a group of UEs in a control area of the network entity for coordinated interference. Each UE within the control area may report its radar waveform generation capabilities to the network entity. Based on the reported capabilities, the network entity may identify a common configuration (e.g., a common set of radar waveform generation parameters) for the radars of the group of UEs to use when generating a radar waveform by respective UEs in the group of UEs. Similarly, the network entity may identify updates for the common configuration, such as if radars enter or leave the control area of the network entity. The network entity may signal a new common configuration, or updates to a currently used common configuration, to radars within the control area of the network entity. The radars may generate a radar waveform according to the common configuration in order to perform coordinated interference.

Aspects of the disclosure are initially described in the context of wireless communications systems. Aspects of the disclosure are further illustrated by and described with reference to apparatus diagrams, system diagrams, and flowcharts that relate to network-assisted coordination for multi-radar interference.

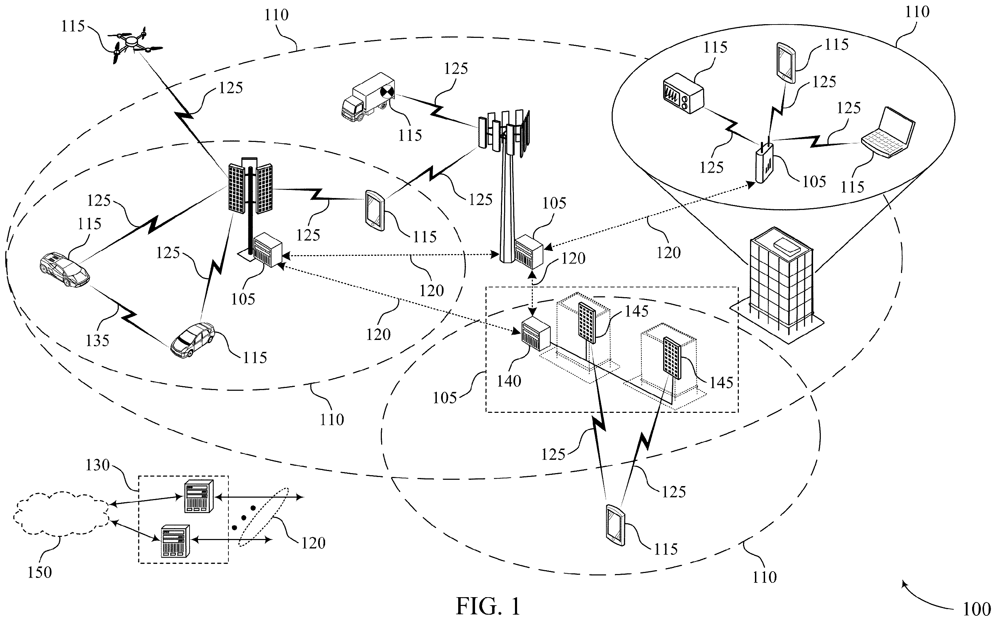

**FIG. 1** illustrates an example of a wireless communications system 100 that supports network-assisted coordination for multi-radar interference in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f})* sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

Each base station 105 may provide communication coverage via one or more cells, for example a macro cell, a small cell, a hot spot, or other types of cells, or any combination thereof. The term "cell" may refer to a logical communication entity used for communication with a base station 105 (e.g., over a carrier) and may be associated with an identifier for distinguishing neighboring cells (e.g., a physical cell identifier (PCID), a virtual cell identifier (VCID), or others). In some examples, a cell may also refer to a geographic coverage area 110 or a portion of a geographic coverage area 110 (e.g., a sector) over which the logical communication entity operates. Such cells may range from smaller areas (e.g., a structure, a subset of structure) to larger areas depending on various factors such as the capabilities of the base station 105. For example, a cell may be or include a building, a subset of a building, or exterior spaces between or overlapping with geographic coverage areas 110, among other examples.

A macro cell generally covers a relatively large geographic area (e.g., several kilometers in radius) and may allow unrestricted access by the UEs 115 with service subscriptions with the network provider supporting the macro cell. A small cell may be associated with a lower-powered base station 105, as compared with a macro cell, and a small cell may operate in the same or different (e.g., licensed, unlicensed) frequency bands as macro cells. Small cells may provide unrestricted access to the UEs 115 with service subscriptions with the network provider or may provide restricted access to the UEs 115 having an association with the small cell (e.g., the UEs 115 in a closed subscriber group (CSG), the UEs 115 associated with users in a home or office). A base station 105 may support one or multiple cells and may also support communications over the one or more cells using one or multiple component carriers.

In some examples, a carrier may support multiple cells, and different cells may be configured according to different protocol types (e.g., MTC, narrowband IoT (NB-IoT), enhanced mobile broadband (eMBB)) that may provide access for different types of devices.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may support synchronous or asynchronous operation. For synchronous operation, the base stations 105 may have similar frame timings, and transmissions from different base stations 105 may be approximately aligned in time. For asynchronous operation, the base stations 105 may have different frame timings, and transmissions from different base stations 105 may, in some examples, not be aligned in time. The techniques described herein may be used for either synchronous or asynchronous operations.

Some UEs 115, such as MTC or IoT devices, may be low cost or low complexity devices and may provide for automated communication between machines (e.g., via Machine-to-Machine (M2M) communication). M2M communication or MTC may refer to data communication technologies that allow devices to communicate with one another or a base station 105 without human intervention. In some examples, M2M communication or MTC may include communications from devices that integrate sensors or meters to measure or capture information and relay such information to a central server or application program that makes use of the information or presents the information to humans interacting with the application program. Some UEs 115 may be designed to collect information or enable automated behavior of machines or other devices. Examples of applications for MTC devices include smart metering, inventory monitoring, water level monitoring, equipment monitoring, healthcare monitoring, wildlife monitoring, weather and geological event monitoring, fleet management and tracking, remote security sensing, physical access control, and transaction-based business charging.

The wireless communications system 100 may be configured to support ultra-reliable communications or low-latency communications, or various combinations thereof. For example, the wireless communications system 100 may be configured to support ultra-reliable low-latency communications (URLLC). The UEs 115 may be designed to support ultra-reliable, low-latency, or critical functions. Ultra-reliable communications may include private communication or group communication and may be supported by one or more services such as push-to-talk, video, or data. Support for ultra-reliable, low-latency functions may include prioritization of services, and such services may be used for public safety or general commercial applications. The terms ultra-reliable, low-latency, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

In some systems, the D2D communication link 135 may be an example of a communication channel, such as a sidelink communication channel, between vehicles (e.g., UEs 115). In some examples, vehicles may communicate using V2X communications, vehicle-to-vehicle (V2V) communications, or some combination of these. A vehicle may signal information related to traffic conditions, signal scheduling, weather, safety, emergencies, or any other information relevant to a V2X system. In some examples, vehicles in a V2X system may communicate with roadside infrastructure, such as roadside units, or with the network via one or more network nodes (e.g., base stations 105) using vehicle-to-network (V2N) communications, or with both.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may also operate in a super high frequency (SHF) region using frequency bands from 3 GHz to 30 GHz, also known as the centimeter band, or in an extremely high frequency (EHF) region of the spectrum (e.g., from 30 GHz to 300 GHz), also known as the millimeter band. In some examples, the wireless communications system 100 may support millimeter wave (mmW) communications between the UEs 115 and the base stations 105, and EHF antennas of the respective devices may be smaller and more closely spaced than UHF antennas. In some examples, this may facilitate use of antenna arrays within a device. The propagation of EHF transmissions, however, may be subject to even greater atmospheric attenuation and shorter range than SHF or UHF transmissions. The techniques disclosed herein may be employed across transmissions that use one or more different frequency regions, and designated use of bands across these frequency regions may differ by country or regulating body.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A base station 105 or a UE 115 may use beam sweeping techniques as part of beam forming operations. For example, a base station 105 may use multiple antennas or antenna arrays (e.g., antenna panels) to conduct beamforming operations for directional communications with a UE 115. Some signals (e.g., synchronization signals, reference signals, beam selection signals, or other control signals) may be transmitted by a base station 105 multiple times in different directions. For example, the base station 105 may transmit a signal according to different beamforming weight sets associated with different directions of transmission. Transmissions in different beam directions may be used to identify (e.g., by a transmitting device, such as a base station 105, or by a receiving device, such as a UE 115) a beam direction for later transmission or reception by the base station 105.

Some signals, such as data signals associated with a particular receiving device, may be transmitted by a base station 105 in a single beam direction (e.g., a direction associated with the receiving device, such as a UE 115). In some examples, the beam direction associated with transmissions along a single beam direction may be determined based on a signal that was transmitted in one or more beam directions. For example, a UE 115 may receive one or more of the signals transmitted by the base station 105 in different directions and may report to the base station 105 an indication of the signal that the UE 115 received with a highest signal quality or an otherwise acceptable signal quality.

In some examples, transmissions by a device (e.g., by a base station 105 or a UE 115) may be performed using multiple beam directions, and the device may use a combination of digital precoding or radio frequency beamforming to generate a combined beam for transmission (e.g., from a base station 105 to a UE 115). The UE 115 may report feedback that indicates precoding weights for one or more beam directions, and the feedback may correspond to a configured number of beams across a system bandwidth or one or more sub-bands. The base station 105 may transmit a reference signal (e.g., a cell-specific reference signal (CRS), a channel state information reference signal (CSI-RS)), which may be precoded or unprecoded. The UE 115 may provide feedback for beam selection, which may be a precoding matrix indicator (PMI) or codebook-based feedback (e.g., a multi-panel type codebook, a linear combination type codebook, a port selection type codebook). Although these techniques are described with reference to signals transmitted in one or more directions by a base station 105, a UE 115 may employ similar techniques for transmitting signals multiple times in different directions (e.g., for identifying a beam direction for subsequent transmission or reception by the UE 115) or for transmitting a signal in a single direction (e.g., for transmitting data to a receiving device).

A receiving device (e.g., a UE 115) may try multiple receive configurations (e.g., directional listening) when receiving various signals from the base station 105, such as synchronization signals, reference signals, beam selection signals, or other control signals. For example, a receiving device may try multiple receive directions by receiving via different antenna subarrays, by processing received signals according to different antenna subarrays, by receiving according to different receive beamforming weight sets (e.g., different directional listening weight sets) applied to signals received at multiple antenna elements of an antenna array, or by processing received signals according to different receive beamforming weight sets applied to signals received at multiple antenna elements of an antenna array, any of which may be referred to as "listening" according to different receive configurations or receive directions. In some examples, a receiving device may use a single receive configuration to receive along a single beam direction (e.g., when receiving a data signal). The single receive configuration may be aligned in a beam direction determined based on listening according to different receive configuration directions (e.g., a beam direction determined to have a highest signal strength, highest signal-to-noise ratio (SNR), or otherwise acceptable signal quality based on listening according to multiple beam directions).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

The UEs 115 and the base stations 105 may support retransmissions of data to increase the likelihood that data is received successfully. Hybrid automatic repeat request (HARQ) feedback is one technique for increasing the likelihood that data is received correctly over a communication link 125. HARQ may include a combination of error detection (e.g., using a cyclic redundancy check (CRC)), forward error correction (FEC), and retransmission (e.g., automatic repeat request (ARQ)). HARQ may improve throughput at the MAC layer in poor radio conditions (e.g., low signal-to-noise conditions). In some examples, a device may support same-slot HARQ feedback, where the device may provide HARQ feedback in a specific slot for data received in a previous symbol in the slot. In other cases, the device may provide HARQ feedback in a subsequent slot, or according to some other time interval.

The wireless communications system 100 may be an example of a V2X wireless communications system. For example, the wireless communications system 100 may support V2X communications between UEs 115, such as V-UEs 115. A V-UE 115 may be equipped with a radar for object detection, such as to detect other V-UEs 115. For example, a radar at a V-UE 115 may transmit a signal and monitor for reflections of the signal off other objects. The V-UE 115 may receive the reflected signal from targets and determine location information based on the reflected signal. For example, the V-UE 115 may determine speed, direction, and positioning information, among other information.

Radars in some systems may not be provisioned for operation under co-channel interference. For example, if multiple radars operate over a same band, a signal transmitted by a first radar may be received by a second, nearby radar. The signal from the first radar may be unwanted interference at the second radar, as the second radar may identify the signal as a reflected signal, creating a false, surplus, or ghost target. Additionally, or alternatively, the interference from the first radar may increase a noise floor at the second radar, affecting the reliability of target detection at the second radar.

Some wireless communications systems may implement techniques to mitigate or manage co-channel interference, such as by coordinating the interference from the devices. For example, each mutually interfering radar may transmit a same frequency-modulated continuous wave (FMCW) waveform. However, each radar may apply, independent of each other, a delay prior to the start of each new frame. A radar may introduce a different delay among frames transmitted by the radar. The delay may introduce an artificial time offset among frames transmitted by different radars.

By using common waveforms (e.g., FMCW waveforms), interference may generate surplus or ghost targets at the radar side. However, by using frame offsets which pseudo-randomly change in each transmitted frame, the ghost target range (e.g., position) may appear as though the ghost target is moving in an unrealistic fashion between successive frames. Therefore, a UE 115 receiving the interfering signal may apply filtering and processing of detected targets across frames to naturally discard ghost targets as false alarms, as they correspond to non-realistic movement.

The wireless communications system 100 may implement techniques to coordinate and provide a common configuration for radars to generate a common FMCW waveform. For example, these techniques may include network-assisted coordination, where a common configuration is identified or selected by a network entity, such as an RSU, a base station 105, a TRP, or any combination thereof. These techniques may consider radar capabilities of UEs 115 (e.g., V-UEs 115) in the wireless communications system 100 to select a common configuration. Additionally, the wireless communications system 100 may support techniques to select fallback configurations or configurations for subgroups of UEs 115 if a common configuration cannot be supported by each UE 115 within a coordination area or geographic control area of the network entity.

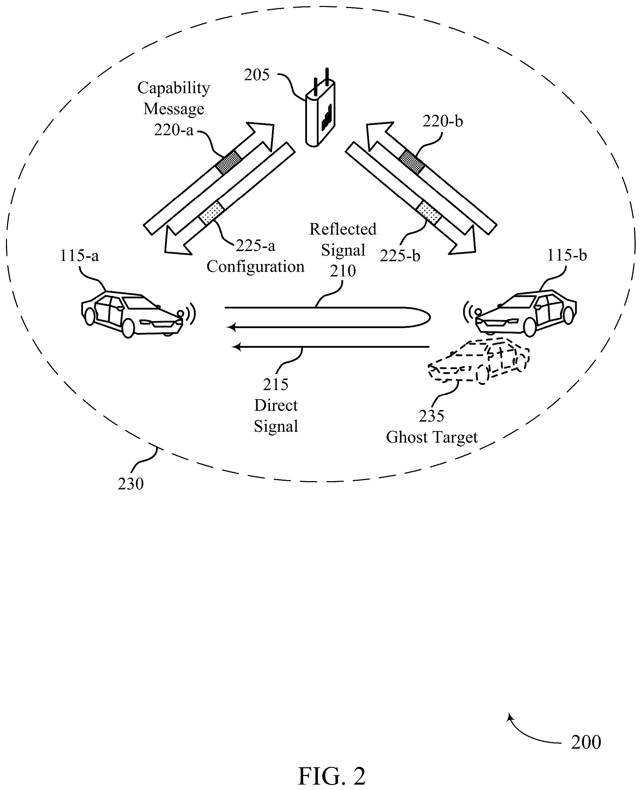

**FIG. 2** illustrates an example of a wireless communications system 200 that supports network-assisted coordination for multi-radar interference in accordance with aspects of the present disclosure. The wireless communications system 200 may include an RSU 205, a UE 115-a, and a UE 115-b. The UE 115-a and the UE 115-b may each be an example of a UE 115 as described with reference to FIG. 1. For example, the UE 115-a and the UE 115-b may each be an example of a V-UE 115. The RSU 205 may be an example of a network entity, a UE 115, or a base station 105, or any combination thereof, as described with reference to FIG. 1.

The wireless communications system 200 may include aspects of or be an example of a V2X wireless communications system. Additionally, or alternatively, the wireless communications system 200 may include aspects of a Uu wireless communications system, including uplink communications and downlink communications between UEs 115 and base stations 105, among other devices. For example, the wireless communications system 100 may support V2X communications between V-UEs 115, such as the UE 115-a and the UE 115-b. Some UEs 115 may be equipped with a radar for object detection, such as other UEs 115. For example, a radar at a UE 115-a may transmit a signal and monitor for reflections of the signal (e.g., a reflected signal 210) off other objects. The UE 115-a may receive the reflected signal 210 from targets and determine location information based on the reflected signal 210. For example, the UE 115-a may transmit a signal which is reflected off of the UE 115-b, and the UE 115-a may determine speed, direction, and positioning information (e.g., distance or a range from the transmitter, etc.), among other information, of the UE 115-b based on the reflected signal 210.

Radars in some systems may not be provisioned for operation under co-channel interference. For example, if multiple radars operate over a same band, a signal transmitted by a first radar may be received by a second, nearby radar. The signal from the first radar may be unwanted interference at the second radar, as the second radar may identify the signal as a reflected signal, creating a false alarm, surplus, or a ghost target. For example, a direct signal 215 from a radar of the UE 115-b may be detected by the UE 115-a, creating a ghost target 235 from the direct signal 215. As such, the UE 115-b may effectively create two targets, one from the reflected signal 210 and another from the direct signal 215 for the ghost target 235. Additionally, or alternatively, the interference from the first radar may increase a noise floor at the second radar, affecting the reliability of target detection at the second radar.

The wireless communications systems 200 may implement schemes for coordinated interference to mitigate or manage co-channel interference. For example, each mutually interfering radar may transmit a same FMCW waveform. However, each radar may apply, independent of each other, a delay prior to the start of each new frame. For example, the UE 115-b may transmit a signal 215 which has a same waveform as the reflected signal 210, but the UE 115-b may apply frame delays at the start of each new frame which are different from the frame delays applied by the UE 115-a. These different delays may introduce an artificial time offset among frames transmitted by different radars, and the artificial time offset may change randomly in each frame. By using common waveforms (e.g., FMCW waveforms), interference may generate surplus or ghost targets 235 at the radar side. However, by using frame offsets which pseudo-randomly change, the ghost target range (e.g., position) may appear as though the ghost target 235 is moving in an unrealistic fashion between successive frames. Therefore, a UE 115 receiving the interfering signal may apply filtering and processing of detected targets across frames to naturally discard ghost targets as false alarms, as they correspond to non-realistic movement. As such, the UE 115-a may identify a first target from the reflected signal 210 as a real target and identify a second target from the signal 215 as the ghost target 235.

The wireless communications system 200 supports techniques for configuring and maintaining a common configuration for coordinated interference. For example, a network entity, such as the RSU 205, may identify a common FMCW configuration and communicate the common FMCW configuration to all UEs 115, radars, or the UEs 115 equipped with radars, within a control area 230 of the RSU 205. The UEs 115 may implement the common FMCW configuration while applying a device-specific frame offset in order to support coordinated interference between UEs 115 in the wireless communications system 200.

Each UE 115 may transmit a capability message 220 to report the technical capabilities of an equipped radar. For example, the UE 115-a may transmit a capability message 220-a to the RSU 205, and the UE 115-b may transmit a capability message 220-b to the RSU 205. If multiple radars are in or equipped to a UE 115, the UE 115 may report capabilities for one or more of the radars. In some cases, the UE 115 may assign each radar a unique identifier. Any radar in the control area 230 may be identified or determined by a radar identifier and a vehicle identifier (e.g., a vehicle identifier used to perform V2X communications). In some cases, the UEs 115 may additionally, or alternatively, indicate preferences for the radar waveform parameters or common radar waveform configuration.

A UE 115, such as the UE 115-a or the UE 115-b, may indicate radar capabilities in terms of parameters or operations supported by one or more radars equipped to the UE 115. For example, the UE 115-a may transmit the capability message 220-a to report capabilities or parameters which are supported for each radar equipped to the UE 115-a. In some cases, the capabilities or parameters may include a start frequency (e.g., of a chirp frequency sweep, or a starting frequency of a bandwidth for the chirp), an end frequency (e.g., of the chirp frequency sweep, or an ending frequency of the bandwidth for the chirp), an upchirp duration, a number of chirps per frame, a chirp period (e.g., within a frame interval), a maximum detected beat frequency, a number of time domain multiple access (TDMA) transmit antennas, a number of receive antennas, a transmit power, a gap between successive frames (e.g., a time needed for real-time frame processing), a capability of applying a delay to each frame, or any combination thereof. Additionally, or alternatively, a UE 115 may indicate a transmit/receive orientation (e.g., field of view) with respect to some common (e.g., global or pre-configured) references.

In some cases, a UE 115 may include an indication of whether an equipped radar can support or cannot support applying a delay to each frame in a capability message 220. If the equipped radar can support applying a delay (e.g., a frame delay), the capability message 220 may indicate whether the radar can support a fixed delay value for all frames or a variable delay between frames, or both. If the radar can support a variable delay, the UE 115 may indicate whether the radar can support a random variable delay (e.g., the delay applied to each frame is generated randomly) or a variable delay which follows a specific pattern (e.g., the delays applied to each frame may follow a repeating pattern, which may be determined according to a codebook). If the radar is capable of applying the variable delay which follows a specific pattern, the UE 115 may indicate the supported patterns, such as by indicated one or more entries of a pre-configured codebook including multiple different patterns.

In some cases, the supported parameters or capabilities may be reported independently of each other. For example, any combination of parameter values out those reported may be supported. In some cases, a list of supported values may be reported for each parameter or capability. For example, a UE 115 may report multiple values for starting and stopping frequencies or bandwidths, such as fStart={77 GHz, 77.1 GHz, 77.5 GHz} and fStop={77.1 GHz, 77.5 GHz, 78 GHz}. Additionally, or alternatively, the UE 115 may report a range or a continuous interval of values for some parameters or capabilities. For example, the UE 115 may report that a frequency start value may range between 77 GHz and 79 GHz. In some cases, the reported values may be up to a radar implementation (e.g., no restrictions on reported values), or the values of the parameters may be restricted to a pre-configured codebook. The codebook may be global (e.g., applied within at least the wireless communications system 200) and/or preconfigured. For example, the RSU 205 may indicate or provide the codebook to UEs 115 or radars within the control area 230 served or controlled by the RSU 205.

In some examples, a UE 115 may indicate supported configurations for a radar. For example, a UE 115 may indicate at least one of the multiple different configurations which are supported by a radar equipped to the UE 115. Different configurations may correspond to different sets of parameters for capabilities. For example, a first configuration may indicate a first set of parameters or capabilities, and a second configuration may indicate a second set of parameters or capabilities, at least some of which may be different from the first configuration.

For example, the UE 115-a may indicate support for a first configuration and a second configuration. The first configuration may include values such as a starting frequency of 77 GHz, an ending frequency of 78 GHz, an upchirp duration of 40 microseconds, a chirp duration of 55 microseconds, two TDMA transmit antennas, and 100 chirps per frame, among other values for other possible parameters. The second configuration may include values such as a starting frequency of 77 GHz, an ending frequency of 77.5 GHz, an upchirp duration of 20 microseconds, a chirp duration of 35 microseconds, two TDMA transmit antennas, and 150 chirps per frame, among other values for other possible parameters.

A UE radar may be able to support and indicate multiple configurations. In some cases, the configurations may be up to a radar implementation (e.g., there may not be restrictions on configuration parameter value combinations), or the configurations may be contained, configured, or defined according to a preconfigured codebook or list of configurations. The codebook of configurations may be global or preconfigured. For example, the RSU 205 may indicate a list or codebook of configurations which are supported within the control area 230 associated with the RSU 205.

In some cases, a UE 115 may periodically transmit a capability message 220 indicating capabilities for one or more radars of the UE 115. For example, the UE 115 may be configured to periodically transmit the capability message 220 according to a periodicity. The periodicity may be preconfigured, such as being indicated by control signaling from the RSU 205. For example, the UE 115-a may transmit the capability message 220-a according to a periodicity, such as 100 ms. Additionally, or alternatively, the periodicity may be based on a location of the UE 115, such as a sidelink control information zone identifier.

Additionally, or alternatively, a UE 115 may dynamically transmit a capability message 220, such as after being triggered by the network. For example, the RSU 205 may send a broadcast signal, such as beacon signal, indicating or requesting for vehicles entering the control area 230 to report radar capabilities. A UE 115 receiving the broadcast signal may, in response, transmit a capability message 220 indicating radar capabilities for a radar equipped to the UE 115. Once reporting is triggered, the capability message 220 may be transmitted repeatedly with a configured periodicity until a timer expires, until the UE 115 moves outside of a pre-configured area (e.g., an area the RSU 205 controls or the control area 230), until the UE 115 receives a message by the network indicating to stop reporting capabilities (e.g. an acknowledgment for the capability message 220 or another type of indication), or any combination thereof.

The broadcast signal from the RSU 205 may limit reports from vehicles within a certain distance from the RSU 205, similar to a distance-based negative acknowledgment in sidelink groupcast. In some cases, the broadcast or beacon signal may include, or indicate, different FMCW configurations, such as a codebook of configurations. For example, the broadcast signal may indicate multiple different configurations which are supported within the control area 230, and a UE 115 may report which one or more configurations of the multiple configurations any equipped radars of the UE 115 can support.

The RSU 205 may determine which radars should use a common configuration and indicate the common configuration to UEs 115 equipped with those radars. For example, the RSU 205 may determine which UEs 115 equipped with radars are within the control area 230 of the RSU 205 in order to determine which capabilities to consider when selecting a common configuration.

For example, the RSU 205 may determine whether a vehicle, such as a UE 115, is within the control area 230 of the RSU 205 based on one or more criteria or conditions. For a first example criterion, if periodic capability reporting is configured or enabled, the RSU 205 may determine a UE 115 is within the control area 230 of the RSU 205 if the RSU 205 has received capability messages 220 from the UE 115 for at least a threshold duration of time and with an average reference signal received power (RSRP) exceeding a threshold value. For example, if the RSU 205 has received the capability message 220-a from the UE 115-a at the configured periodicity (e.g., 100 ms) for a certain duration of time (e.g., 2 seconds), and an average RSRP for the capability messages 220-a exceeds an RSRP threshold, the RSU 205 may consider the UE 115-a as being within the control area 230 and a candidate for being configured with a common configuration. For a second example criterion, if a UE 115 explicitly indicates that a capability message 220 is transmitted in response to (e.g., was triggered by) a beacon signal for network-triggered capability reporting, the RSU 205 may consider the UE 115 as being within the control area 230 and a candidate for being configured with a common configuration. For a third example criterion, if a UE 115 has a position relative to a certain geographical area (e.g., being within a geographic area of RSU control) or being within radar distance from the RSU 205 (e.g., based on a V2X zone identifier), or both, the UE 115 may be considered within the control area 230 of the RSU 205 and a candidate for being configured with a common configuration. For a fourth example criterion, if a UE 115 has a movement direction and speed within respective configured ranges or which satisfy respective thresholds, the RSU 205 may consider the UE 115 as being within the control area 230 and a candidate for being configured with a common configuration. Any combination of these criteria, or combination of any aspects of these criteria, may be considered to determine whether a UE 115 is to be configured with a common FMCW configuration.

The criteria for determining whether a UE 115 is within a control area 230 may be different for different RSU 205. For example, the criteria may be based on positioning of the RSU 205, radar density, and vehicle speeds. The criteria or parameters may be configurable and may be updated if, for example, conditions at the RSU 205 change. For example, if radar density changes (e.g., many UEs 115 leave proximity of the RSU 205), the criteria may be updated at the RSU 205.

After identifying candidate UEs 115 or candidate radars, the RSU 205 may identify groups of mutual interferers. For example, the RSU 205 may identify a first group of UEs with a common transmit/receive orientation and transmit power which may interfere with each other. Each group may have a common configuration derived from reported capabilities of radars in the group. In some examples, the RSU 205 may identify a single group, where each radar within the control area 230 of the RSU 205 uses a single common configuration. In some other examples, the RSU 205 may identify multiple groups, such as grouping together radars which may interfere with each other based on having colliding transmit and receive directions or similar transmit powers, or both. In some cases, the group may be based on capability, such as if a first group of UEs 115 are capable of supporting a first FMCW waveform configuration, and a second group of UEs 115 are capable of supporting a second FMCW waveform configuration but not the first FMCW waveform configuration.

The network, such as the RSU 205, may identify one or more configurations based on the reported capabilities. In some cases, the RSU 205 may identify feasible configurations which achieve or exceed minimum radar requirements. In some cases, the RSU 205 may identify configurations which are supported by all radars within the control area 230. Some additional techniques are described in the case where not all radars can support a common configuration, or where not all radars can support a configuration which at least satisfies minimum radar requirements.

The RSU 205 may select one of the identified configurations as the common configuration. In some cases, the RSU 205 may randomly select the common configuration from the identified configurations. In some cases, the RSU 205 may rank the identified feasible configurations according to certain radar requirements, such as detection range. The RSU 205 may select a common configuration from the identified feasible configurations based on the ranking. For example, the RSU 205 may select a common configuration from the identified feasible configurations based on an identified configuration with a largest detection range. In some cases, a configuration of the configuration indication from the RSU 205 may follow any options considered for the capabilities format message. For example, the RSU 205 may indicate a common configuration as an index of a pre-configured table or codebook, and each radar may be aware of the indicated configuration.

The RSU 205 may indicate the common configuration to radars which are to follow the common configuration. For example, the RSU 205 may transmit a configuration message 225 to UEs 115, the configuration message 225 indicating a common configuration for radars equipped to the UEs 115. In some cases, the RSU 205 may transmit configuration messages 225 periodically, where the periodicity may be configurable. In some other examples, the RSU 205 may transmit the configuration message 225 when there is a change to the common configuration, such as if radars leave or enter the control area 230 of the RSU 205 which may affect the feasible configurations or best feasible configuration.

In some cases, the RSU 205 may broadcast an indication of the common configuration. For example, the configuration messages 225 may be broadcast messages. In some examples, the RSU 205 may send a groupcast message to indicate the common configuration. For example, the groupcast transmission may indicate that radars within a certain distance from the RSU 205 are to apply the indicated common configuration. In some cases, the distance from the RSU 205 may be based on or correspond to a distance associated with negative acknowledgments. In some cases, the groupcast transmission may be explicitly directed to UEs 115 with certain identifiers (e.g., vehicle identifiers), and UEs 115 which receive this groupcast transmission are to apply the common configuration.

For example, the RSU 205 may identify multiple FMCW configurations which can be supported by the UE 115-a and the UE 115-b. The RSU 205 may select one FMCW configuration as a common configuration, and the RSU 205 may transmit a configuration message 225-a to the UE 115-a and a configuration message 225-b to the UE 115-b. The configuration messages 225 may indicate the selected FMCW configuration as the common configuration. Radars equipped to the UE 115-a and the UE 115-b may then generate FMCW waveforms according to the indicated common configuration. In this way, the UEs 115 may perform coordinated interference using a common configuration, preventing ghost targets 235 and co-channel interference. This common configuration can be updated by the RSU 205.

A vehicle, UE 115, or radar may identify itself as being within the control area 230 of the RSU 205. For example, the UE 115-a may receive a common configuration message, or the RSU 205 may request for the UE 115-a to transmit the capability message 220-a, or both, and the UE 115-a may determine that the UE 115-a is within the control area 230 of the RSU 205. A UE 115 which identifies it is within the control area 230 of the RSU 205 may expect to receive a common configuration message, and the UE 115 may detect RLF if the UE 115 does not receive a common configuration message, or an update for a common configuration, after a threshold duration of time. For example, if the UE 115-a does not receive the configuration message 225-a after the threshold duration of time, the UE 115-a may detect or declare RLF. Additionally, or alternatively, after being configured with a common configuration, the UE 115-a may detect or declare RLF if the common configuration is not updated after a threshold duration of time. For example, the threshold duration of time may be based on a transmit period of the RSU 205, if the RSU 205 periodically transmits the configuration messages 225 (e.g., indicating a common configuration or indicating updates for a common configuration).

When RLF is detected, the UE 115 or a radar at the UE 115 may initiate a timer. In some cases, after initiating the timer, the UE 115 may use a pre-configured, default, or fallback FMCW configuration. In some cases, after initiating the timer, the UE 115 may use a latest-received common configuration. While RLF is detected, the UE 115 may reduce a transmit power to avoid interfering with other radars, such as if the other radars have been configured with an updated common configuration. In some cases, the RSU 205 may transmit control signaling to configure the transmit power reduction.

If a UE 115 which has detected RLF receives a new configuration message prior to the timer expiring, a radar equipped to the UE 115 may follow a configuration indicated by the new configuration message. If the timer expires or exceeds a second (e.g., greater) preconfigured threshold, the UE 115 may assume that the UE 115 has exited the control area 230 of the RSU 205. A UE 115 which determines it has exited the control area 230 of the RSU 205 may change or update an FMCW configuration.

Each UE 115 using a common configuration may apply an independent delay prior to the start of each frame. For example, the UE 115-a and the UE 115-b may use a same FMCW configuration, but the UE 115-a and the UE 115-b may apply different frame delays prior to the start of each frame. For a radar which supports applying a frame delay, the network may indicate a type of delay based what the radar can support. For example, a radar equipped to the UE 115-a may support applying a frame delay as indicated by the capability message 220-a, and the configuration message 225-a may indicate a type of frame delay for the radar to apply. In some other examples, the frame delay for a radar may be indicated separately from the common configuration (e.g., via a different message or different signaling).

If a radar supports both a random delay and a pattern-based delay, the network may specify whether the radar is to apply a random delay or a pattern-based delay. For a random delay, the network may indicate a range of values from which the radar selects a delay for each frame. In some cases, a message to configure the frame delay may be transmitted via unicast, where each radar or each UE 115 equipped with one or more radars receives a separate, explicit message. Additionally, or alternatively, the message to configure the frame delay may be transmitted using groupcast signaling with a payload that aggregates indications for different radars or different UEs, using radar identifiers to differentiate frame delays. In some cases, radars following a same approach, such as a random delay offset, may be indicated separately using a single groupcast message (e.g., as the delay offsets for each of the radars may be randomly determined).

In some cases, a radar may apply a frame delay without receiving and explicit indication or configuration from the network. For example, a frame delay or frame delay configuration may be preconfigured or explicitly indicated, such as via a configuration message 225 for the common configuration. Additionally, or alternatively, radars may autonomously select a frame delay configuration. For example, a radar may use any frame delay configuration which the radar is capable of supporting. In some cases, values for frame delay configurations, such as a range of values for applying a random delay or a codebook for selecting a delay pattern, may be preconfigured (e.g., via RRC signaling or prior signaling).

In some cases, due to inherent clock drift experienced by each radar, the effect of a "random" delay per frame may be achieved by the radars transmitting periodically but with slightly different period. The network may indicate a periodicity to each radar via unicast signaling. For example, the configuration message 225 may include a baseline (e.g., common) configuration, plus a frame period that should be applied (e.g., overriding a default frame period in the baseline configuration). Additionally, or alternatively, the RSU may send unicast messages with a configuration that has the appropriate frame period. For example, a pre-configured table may be populated by multiple copies of baseline common configurations, each copy having a slightly different frame period from other copies. The RSU 205 may indicate, via unicast signaling, which copy a radar should follow.

In some cases, radar coordination for interference mitigation may be more effective under heavy interference conditions. If there is a low density of radars in the control area 230, the radars may not be configured with or use a common configuration. For example, the radars may operate independently, as there may be a small likelihood of detrimental interference effects. In some cases, the RSU 205 may refrain from transmitting configuration messages 225 to UEs 115 if there is a low density of radars in the control area 230, or the RSU 205 may transmit signaling indicating for the radars to use independently-selected configurations, or both.

In some cases, radar density may fluctuate. For example, at a first time, the control area 230 may have few radars with a low likelihood of negative interference effects. However, at a second time, the control area 230 may have a higher density of radars, and there may be a greater likelihood of negative interference effects. The UEs 115 or radars may trigger a network-controlled coordination, such as if the UEs 115 or radars detect mutual interference with other radars. For example, if the UE 115-a detects mutual interference from the signal 215 from the UE 115-b, the UE 115-a may trigger or request, or both, network-assisted coordinated interference. For example, the UE 115-a may send a request for coordination message to the RSU 205. In some cases, UEs 115 or radars may identify themselves as mutually interference (e.g., based on sensing and sidelink message exchanges) and request for the network to coordinate the interfering UEs 115 or radars by transmitting the request for coordination message.

The request for coordination message may, in some cases, be an example of, include aspects of, or be included with a capability message 220. In some cases, the request for coordination message may identify interferers. For example, the request for coordination message may include sidelink UE identifiers, such as the UE 115-a including an identifier for the UE 115-b. The RSU 205 may receive the request for coordination messages from the UEs 115 and identify a common configuration for the radars as described herein.

In some cases, a common configuration does not exist for each radar within the control area 230. In a first example, the RSU 205 may identify a configuration set which is supported by a majority of radars in the control area 230. Radars which can support the configuration may use or conform to the configuration. If the configuration message 225 indicating the configuration is broadcasted, then radars which cannot support the configuration may ignore the configuration message 225. In some cases, the RSU 205 may transmit the configuration message 225 via groupcast to UEs 115 with radars which can support the configuration.

In some cases, the RSU 205 may identify a first configuration set supported by a majority of radars in the control area 230, where the majority of radars in the control area 230 forms a first group of radars. For the remaining radars (e.g., not included in the first group of radars), the RSU 205 may continue to identify configurations which are supported by a remaining majority of radars. For the radars not already belonging to a group with a configuration, the RSU 205 may repeat identifying a common configuration for the largest possible group of radars until all radars have been assigned to a group with a per-group configuration. In some cases, this procedure may be repeated until there is a group of a single radar. The RSU 205 may transmit configuration messages 225 to indicate the groups of respective common FMCW configurations, such as via groupcast or unicast signaling.

In some cases, groups of radars which follow a common configuration may be assigned an exclusive time to transmit, as in a TDMA fashion. For example, a first group of radars using a first common configuration may be assigned a first set of time resources for transmitting radar signaling, such as signaling with an FMCW waveform according to the first common configuration. A second group of radars using a second common configuration may be assigned a second, different set of time resources for transmitting radar signaling, such as signaling with an FMCW waveform according to the second common configuration. In some cases, the time resources allocated to the groups may be indicated in the configuration messages 225. In some cases, the time resources may be configured periodically. For example, the periodicity may be based on a number of configured groups within the control area 230.

For example, the RSU 205 may broadcast a set of possible configurations. The set of possible configurations may be configured as a codebook, with different indices corresponding to different configurations of parameters for generating an FMCW waveform. Each radar, or each UE 115 equipped with a radar, may respond with a list of indices of the configurations the radar supports. The RSU 205 may build a dictionary (e.g., key: value pairs), where the key is a configuration index, and the value is a list of radar identifiers supporting the configuration. The RSU 205 may group radars based on common configurations the radars can support.

As an example, there may be six radars within the control area 230, and the RSU 205 may indicate five different configurations for the control area 230. After receiving capability messages 220 from the UEs 115 with the equipped radars, the RSU 205 may construct a table of key: value pairs similar to Table 1 below.

**Table 1**

| Configuration Index | Radar ID |
|---|---|
| 1 | 1,4,5 |
| 2 | 1,2,4 |
| 3 | 2, 4 |
| 4 | 4, 6 |
| 5 | 3, 5 |

The RSU 205 may find a maximum length of a list of radars that support a common configuration. For example, the RSU 205 may identify i*, where *i** = *argmaxᵢ*{*len*(*config_dict*[*i*]i)}*,* where *config_dict* is the key: value pair dictionary corresponding to Table 1. Radars with identifiers in *config_dict*[*i**] may be grouped together and be configured to follow configuration i*. The configuration dictionary may then be pruned by removing radar identifiers that have already been grouped from other entries in the configuration dictionary.

For example, a first group may be configured for radars 1, 2, and 4 to use configuration 2 from Table 1. Radars 1, 2, and 4 are then removed from the list of radar identifiers for the other configurations. After removing radars 1, 2, and 4, configuration 5 may have the most radars, so a second group may be configured for radars 3 and 5 to use configuration 5. A third group may be configured including just radar 6 to use configuration 4. Therefore, the first group may include three radars, the second group may include two radars, and the third group may include one radar. In some cases, the RSU 205 may identify multiple possible groupings and select assignments which result in the fewest numbers of groups. For example, the RSU 205 may perform recursive backtracking to identify a grouping result with the fewest number of groups.

By implementing these techniques, devices in the wireless communications system 200 may use a common configuration for network-assisted coordinated interference. These techniques may mitigate negative effects of co-channel interference between radars transmitting an FMCW waveform.

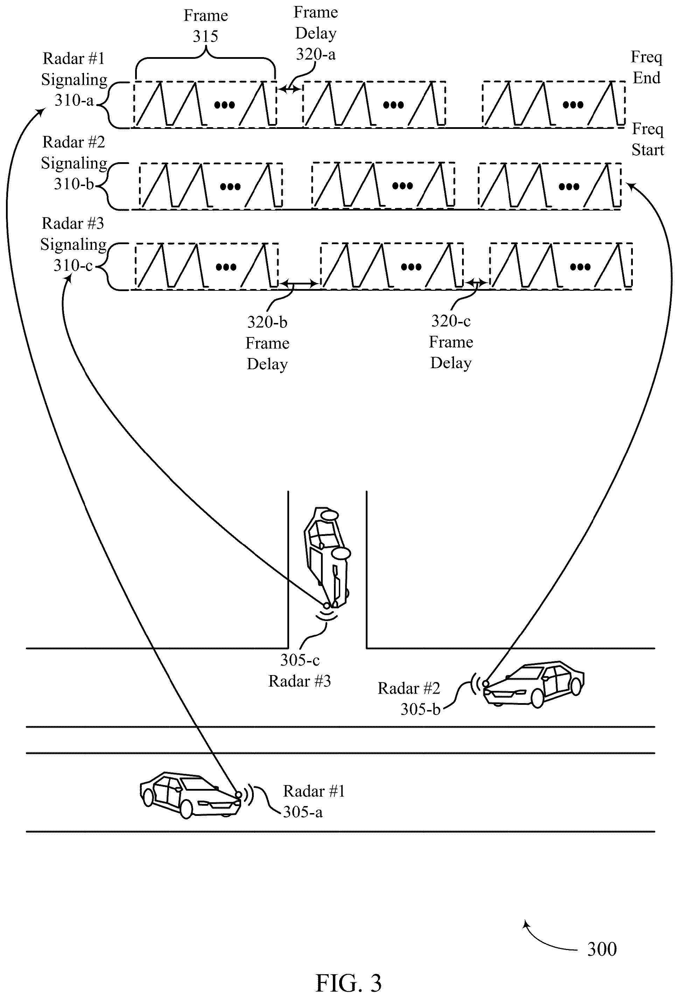

**FIG. 3** illustrates an example of a radar waveform configuration 300 that supports network-assisted coordination for multi-radar interference in accordance with aspects of the present disclosure.

UEs 115, such as vehicles or V-UEs 115, may be equipped with radars to perform radar detection. For example, a first UE 115 may include or be equipped with a first radar 305-a, a second UE 115 may include or be equipped with a second radar 305-b, and a third UE 115 may be equipped or include a third radar 305-c. The radars may implement coordinated interference techniques for FMCW multi-radar coexistence to mitigate negative effects of FMCW interference.

To implement coordinated interreference techniques, each radar may transmit a same waveform. For example, the first radar 305-a may transmit a first radar signaling 310-a, the second radar 305-b may transmit a second radar signaling 310-b, and the third radar 305-c may transmit a third radar signaling 310-c, and each radar signaling 310 may have a same waveform. The waveform may be determined by a network entity, such as an RSU, according to techniques described herein. For example, a common configuration for the waveform may be determined based on respective capabilities of the first radar 305-a, the second radar 305-b, and the third radar 305-c, which are reported to the network entity. The network entity may then configure the UEs 115 or the radars 305, or both, with values for the parameters of the waveform configuration.

The common configuration for a waveform may include multiple parameters. For example, the radars 305 may be configured to transmit an FMCW waveform based on a configured start frequency, end frequency, upchirp duration, number of chirps per frame, chirp period, maximum detected beat frequency, number of TDMA transmit antennas, number of receive antennas, transmit power, gap between successive frames, gap between frames, frame delay configuration, or any combination thereof. The UEs 115 may report capabilities for any associated radars for any one or more of these parameters, and the network entity determine a common configuration for groups of the radars based on the reported capabilities.

When using common FMCW waveforms, interfering signaling may introduce ghost targets at a victim radar. For example, the first radar 305-a may identify targets based on reflected signaling of the fist radar signaling 310-a. However, direct signaling from other radars 305 may also be received by the first radar 305-a and may be interpreted as reflected signaling, introducing an additional or ghost targets.

To improve detection of ghost targets, the radars 305 may apply independent delays to the start of each new frame 315. For example, by applying independent delays, the radars 305 may introduce an artificial time offset among frames 315 transmitted by different radars 305. With frame offsets changing in a pseudo-random manner, the ghost target range (e.g., the position of the ghost target) appears to unrealistically move or hop between successive frames. A UE 115 may filter or process detected targets across frames, and the UE 115 may discard ghost targets as false alarms, as the ghost targets correspond to non-realistic movement.

For example, the first radar 305-a may apply a frame delay 320-a between a first frame and a second frame. The frame delay 320-a may be determined randomly by the first UE 115 or the first radar 305-a, or the frame delay 320-a may be determined based on a pattern or algorithm at the first UE 115 or the first radar 305-a. The third radar 305-c may apply a frame delay 320-b between the first frame and the second frame. The frame delay 320-b may be determined independently from the frame delay 320-a.

In an example, the first radar 305-a may transmit the first radar signaling 310-a and receive reflections of the first radar signaling 310-a. From the reflections, the first UE 115 may identify real targets for the second UE 115 (e.g., including the second radar 305-b) and the third UE 115 (e.g., including the third radar 305-c). The first radar 305 may also directly receive the third radar signaling 310-c from the third radar 305-c. However, due to the third radar 305-c applying frame delays prior to the beginning of each frame, the first UE 115 may filter out a ghost target detected due to receiving the third signaling 310-c. For example, the ghost target from the third radar signaling 310-c may appear to be moving in an unrealistic fashion due to the frame delay 320-b and the frame delay 320-c. As such, the first UE 115 may discard or filter out the ghost target which is detected due to receiving the third radar signaling 310-c.

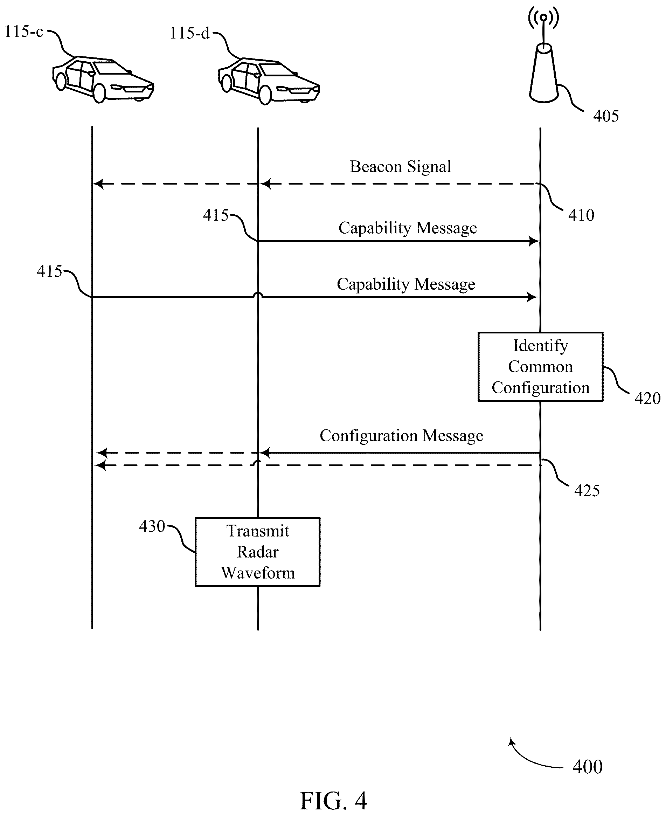

**FIG. 4** illustrates an example of a process flow 400 that supports network-assisted coordination for multi-radar interference in accordance with aspects of the present disclosure.

The process flow 400 may be implemented by a UE 115-c, a UE 115-d or an RSU 405, or any combination thereof. The UE 115-c and the UE 115-d may each be an example of a UE 115 as described with reference to FIGs. 1 and 2. For example, the UE 115-c and the UE 115-d may each be an example of a V-UE 115 equipped with one or more radars. The RSU 405 may be an example of a network entity, a UE 115, a base station 105, or an RSU as described with reference to FIGs. 1 and 2. In some cases, some processes or signaling of the process flow 400 may be performed in a different order than shown. Additionally, or alternatively, some processes or signaling may be added, or some processes or signaling shown may not be performed, or both.

In some cases, at 410, the UE 115-c or the UE 115-d, or both, may receive a broadcast signal from the RSU 405. The broadcast signal may be an example of a beacon signal indicating for vehicles or UEs 115 entering or already within a geographical area to report radar capabilities. For example, the UE 115-d may enter a geographic area or a control area of the RSU 405, and the RSU 405 may request for the UE 115-d to report capabilities of the one or more radars equipped to the UE 115-d.

At 415, the UE 115-d may transmit a message indicating a radar waveform generation capability of the UE 115-d. For example, the UE 115-d may send a capability message indicating capabilities or parameters of the one or more radars equipped to the UE 115-d. The UE 115-d may transmit the message indicating values for a set of radar waveform generation capabilities support by the UE 115-d or a radar of the UE 115-d. For example, the message may indicate values or capabilities for a starting frequency of a chirp frequency sweep, an ending frequency of a chirp frequency sweep, an upchirp duration, a number of chirps per frame, a chirp period or periodicity (e.g., within a frame interval), a maximum detected beat frequency, a number of TDMA transmit antennas of the radar, a number of receive antennas of the radar, a transmit power, a gap between successive frames (e.g., a time used for real-time frame processing), a capability for applying a frame delay, or any combination thereof.

In some cases, the UE 115-d may transmit the message in response to receiving the broadcast signal or the beacon signal. Additionally, or alternatively, the UE 115-d may transmit the message indicating the radar waveform generation capabilities of the UE 115-d periodically, or the UE 115-d may transmit the message based on a geo-location of the UE 115-d, or both.

In some cases, the UE 115-d may transmit the message indicating a capability to support one or more radar waveform configurations of a set of multiple radar waveform configurations. For example, the UE 115-d may be configured with the set of multiple radar waveform configurations, and the UE 115-d may indicate which radar waveform configurations are supported by the UE 115-d or the radar equipped to the UE 115-d. Therefore, in some implementations, instead of reporting individual capabilities for parameters, the UE 115-d may indicate which configurations the UE 115-d can support.

The RSU 405 may receive multiple messages from multiple UEs 115, each message indicating one or more radar waveform generation capabilities of a respective UE of the multiple UEs 115. For example, the RSU 405 may receive the message from the UE 115-d indicating a radar waveform generation capability of the UE 115-d, and the RSU 405 may receive another message form the UE 115-c indicating a radar waveform generation capability of the UE 115-c.

At 420, the RSU 405 may select values for a set of one or more radar waveform generation parameters that are common to a group of UEs 115 including at least a subset of the multiple UEs associated with a geographic control area of the RSU 405 based on the multiple messages. In some cases, the RSU 405 may identify a common configuration (e.g., a common FMCW configuration) for radars or UEs 115, or both, within the geographic control area of the RSU 405. For example, the RSU 405 may identify a common FMCW configuration which can be supported by radars of the UE 115-c and the UE 115-d based on the radar waveform generation capabilities reported by the UE 115-c and the UE 115-d.

In some cases, the RSU 405 may identify a first configuration for a first group of UEs 115 and identify a second configuration for a second group of UEs 115. For example, the RSU 405 may select second values for a second set of one or more radar waveform generation parameters that is common to a second group of UEs including at least a second subset of the multiple UEs based on the multiple messages, where the second group of UEs is different from the first group of UEs 115. The RSU 405 may select the first configuration based on the first configuration being supported by a majority of UEs 115 within the geographic control area of the RSU 405, where the first group of UEs 115 corresponds to the majority of UEs 115. Then, the RSU 405 may identify the second configuration based on the second configuration being supported by a majority of any remaining UEs 115 (e.g., UEs 115 not in the first group) within the geographic control area of the RSU 405.

At 425, the RSU 405 may transmit, to the group of UEs 115, control signaling indicating the values for the set of one or more radar waveform generation parameters common to the group of UEs 115. For example, the RSU 405 may transmit a configuration message to indicate a common configuration for an FMCW waveform to the group of UEs 115. The control signaling may be transmitted via broadcast signaling, groupcast signaling, unicast signaling, or any combination thereof. For example, the RSU 405 may broadcast the indication of the configuration, which may be received by both the UE 115-c and the UE 115-d. In some other examples, the RSU 405 may transmit the indication of the configuration as a groupcast message, which may be received by both the UE 115-c and the UE 115-d. In some other examples, the RSU 405 may individually transmit the indication of the configuration as unicast messages to the UE 115-c and the UE 115-d.

In some cases, the UE 115-d may receive an indication of a frame delay for transmitting a radar waveform. For example, to support coordinated interference, UEs 115 within the geographic control area of the network entity may apply a delay prior to the start of a new frame, effectively introducing an artificial time offset among frames transmitted by different radars. The delay, or frame delay, may enable these UEs 115 to detect false or ghost targets resulting in directly received signals from other radars. In some cases, the control signaling indicating the values for the one or more radar waveform generation parameters may indicate the frame delay for the UE 115-d. Additionally, or alternatively, the UE 115-d may receive other signaling indicating a frame delay for the UE 115-d. In some cases, the UE 115-d may apply a random delay at the beginning of each frame, or the UE 115-d may apply a pattern-based delay.

At 430, the UE 115-d may transmit a radar waveform in accordance with the values for the one or more radar waveform generation parameters. For example, the UE 115-d may transmit a radar waveform, such as an FMCW waveform, according to the configuration indicated by the control signaling. To prevent negative interference effects to other radars, the UE 115-d may apply a frame delay to the beginning of each frame.

In some cases, the parameters of the radar waveform configuration may be updated. For example, the RSU 405 may determine one or more updated radar waveform generation parameters that are common to the group of UEs 115. A radar waveform generation parameter may be updated based on radars or UEs 115 entering or leaving the geographic control area of the RSU 405, which may change a baseline capability level of the UEs 115 within the geographic control area. The RSU 405 may transmit an indication of the one or more updated radar waveform generation parameters to the group of UEs 115. The UEs 115 in the group of UEs 115, such as the UE 115-d, may receive the indication of the one or more updated radar waveform generation parameters and transmit a second radar waveform in accordance with at least the one or more updated radar waveform generation parameters. In some cases, values for a subset of parameters for a configuration may be updated. The UE 115-d may use the updated values for the subset of parameters and continue using the previously configured values for the other parameters.

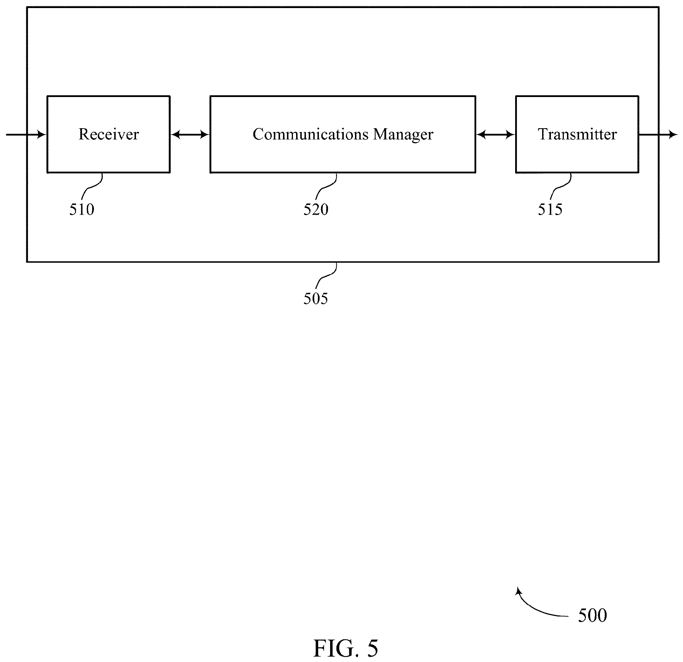

**FIG. 5** shows a block diagram 500 of a device 505 that supports network-assisted coordination for multi-radar interference in accordance with aspects of the present disclosure. The device 505 may be an example of aspects of a UE 115 as described herein. The device 505 may include a receiver 510, a transmitter 515, and a communications manager 520. The device 505 may also include a processor. Each of these components may be in communication with one another (e.g., via one or more buses).

The receiver 510 may provide a means for receiving information such as packets, user data, control information, or any combination thereof associated with various information channels (e.g., control channels, data channels, information channels related to network-assisted coordination for multi-radar interference). Information may be passed on to other components of the device 505. The receiver 510 may utilize a single antenna or a set of multiple antennas.

The transmitter 515 may provide a means for transmitting signals generated by other components of the device 505. For example, the transmitter 515 may transmit information such as packets, user data, control information, or any combination thereof associated with various information channels (e.g., control channels, data channels, information channels related to network-assisted coordination for multi-radar interference). In some examples, the transmitter 515 may be co-located with a receiver 510 in a transceiver module. The transmitter 515 may utilize a single antenna or a set of multiple antennas.

The communications manager 520, the receiver 510, the transmitter 515, or various combinations thereof or various components thereof may be examples of means for performing various aspects of network-assisted coordination for multi-radar interference as described herein. For example, the communications manager 520, the receiver 510, the transmitter 515, or various combinations or components thereof may support a method for performing one or more of the functions described herein.

In some examples, the communications manager 520, the receiver 510, the transmitter 515, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 520, the receiver 510, the transmitter 515, or various combinations or components thereof may be implemented in code (e.g., as communications management software or firmware) executed by a processor. If implemented in code executed by a processor, the functions of the communications manager 520, the receiver 510, the transmitter 515, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 520 may be configured to perform various operations (e.g., receiving, monitoring, transmitting) using or otherwise in cooperation with the receiver 510, the transmitter 515, or both. For example, the communications manager 520 may receive information from the receiver 510, send information to the transmitter 515, or be integrated in combination with the receiver 510, the transmitter 515, or both to receive information, transmit information, or perform various other operations as described herein.

The communications manager 520 may support wireless communications at a UE in accordance with examples as disclosed herein. For example, the communications manager 520 may be configured as or otherwise support a means for transmitting a message indicating a radar waveform generation capability of the UE. The communications manager 520 may be configured as or otherwise support a means for receiving, from a network entity, control signaling indicating values for one or more radar waveform generation parameters common to a group of UEs including the UE associated with a geographic control area of the network entity in response to transmitting the message indicating the radar waveform generation capability of the UE. The communications manager 520 may be configured as or otherwise support a means for transmitting a radar waveform in accordance with the values for the one or more radar waveform generation parameters.

By including or configuring the communications manager 520 in accordance with examples as described herein, the device 505 (e.g., a processor controlling or otherwise coupled to the receiver 510, the transmitter 515, the communications manager 520, or a combination thereof) may support techniques for a reduced processing load at the device 505. For example, these techniques may improve techniques of detecting false or ghost targets in a multi-radar system, thereby reducing a processing power needed to identify false or ghost targets.

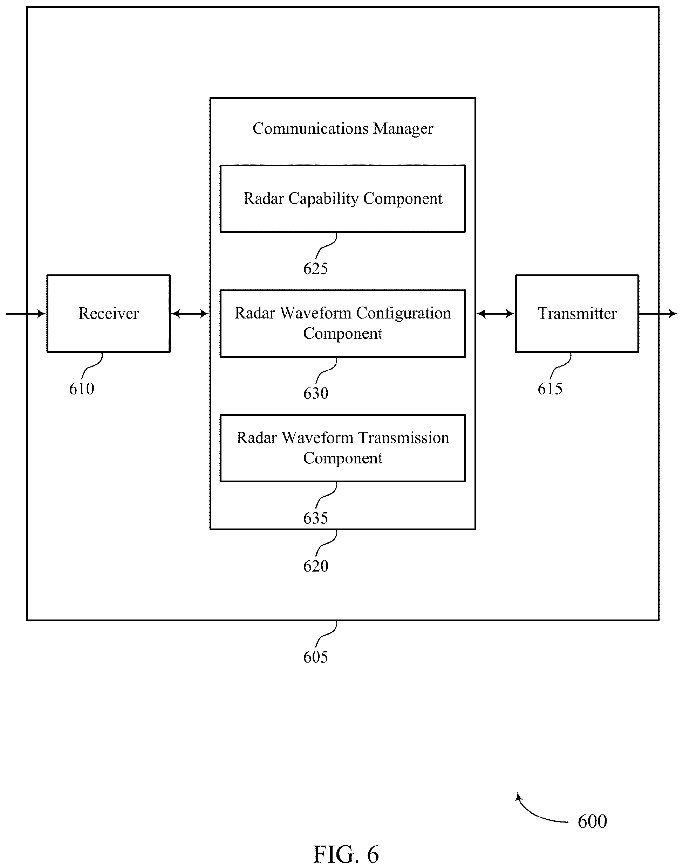

**FIG. 6** shows a block diagram 600 of a device 605 that supports network-assisted coordination for multi-radar interference in accordance with aspects of the present disclosure. The device 605 may be an example of aspects of a device 505 or a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to network-assisted coordination for multi-radar interference). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to network-assisted coordination for multi-radar interference). In some examples, the transmitter 615 may be co-located with a receiver 610 in a transceiver module. The transmitter 615 may utilize a single antenna or a set of multiple antennas.

The device 605, or various components thereof, may be an example of means for performing various aspects of network-assisted coordination for multi-radar interference as described herein. For example, the communications manager 620 may include a radar capability component 625, a radar waveform configuration component 630, a radar waveform transmission component 635, or any combination thereof. The communications manager 620 may be an example of aspects of a communications manager 520 as described herein. In some examples, the communications manager 620, or various components thereof, may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a UE in accordance with examples as disclosed herein. The radar capability component 625 may be configured as or otherwise support a means for transmitting a message indicating a radar waveform generation capability of the UE. The radar waveform configuration component 630 may be configured as or otherwise support a means for receiving, from a network entity, control signaling indicating values for one or more radar waveform generation parameters common to a group of UEs including the UE associated with a geographic control area of the network entity in response to transmitting the message indicating the radar waveform generation capability of the UE. The radar waveform transmission component 635 may be configured as or otherwise support a means for transmitting a radar waveform in accordance with the values for the one or more radar waveform generation parameters.

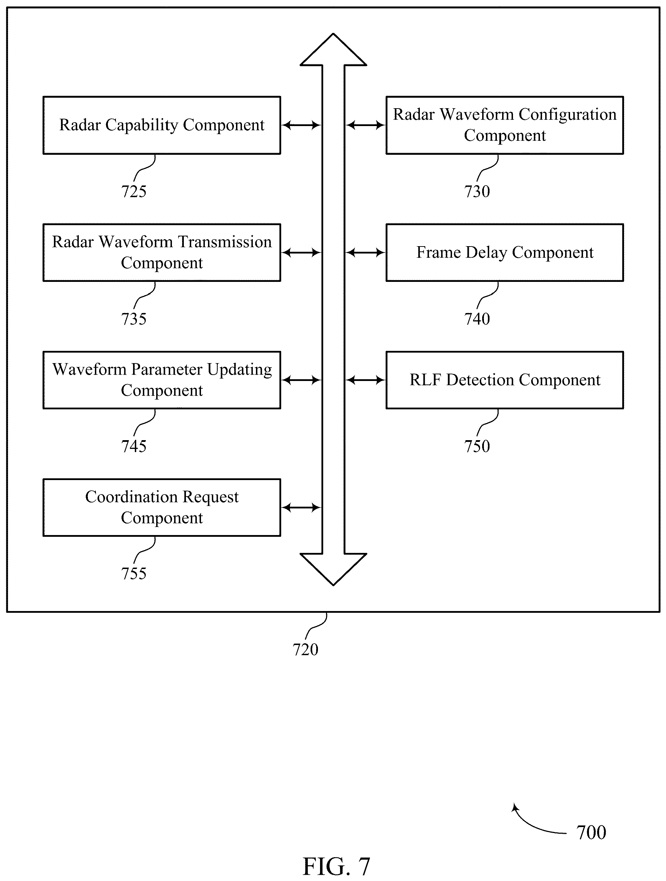

**FIG. 7** shows a block diagram 700 of a communications manager 720 that supports network-assisted coordination for multi-radar interference in accordance with aspects of the present disclosure. The communications manager 720 may be an example of aspects of a communications manager 520, a communications manager 620, or both, as described herein. The communications manager 720, or various components thereof, may be an example of means for performing various aspects of network-assisted coordination for multi-radar interference as described herein. For example, the communications manager 720 may include a radar capability component 725, a radar waveform configuration component 730, a radar waveform transmission component 735, a frame delay component 740, a waveform parameter updating component 745, an RLF detection component 750, a coordination request component 755, or any combination thereof. Each of these components may communicate, directly or indirectly, with one another (e.g., via one or more buses).

The communications manager 720 may support wireless communications at a UE in accordance with examples as disclosed herein. The radar capability component 725 may be configured as or otherwise support a means for transmitting a message indicating a radar waveform generation capability of the UE. The radar waveform configuration component 730 may be configured as or otherwise support a means for receiving, from a network entity, control signaling indicating values for one or more radar waveform generation parameters common to a group of UEs including the UE associated with a geographic control area of the network entity in response to transmitting the message indicating the radar waveform generation capability of the UE. The radar waveform transmission component 735 may be configured as or otherwise support a means for transmitting a radar waveform in accordance with the values for the one or more radar waveform generation parameters.

In some examples, to support transmitting the message, the radar capability component 725 may be configured as or otherwise support a means for transmitting the message indicating values for a set of radar waveform generation capabilities supported by the UE, where the control signaling indicates the values for the one or more radar waveform generation parameters common to the group of UEs based on the values for the set of radar waveform generation capabilities.

In some examples, to support transmitting the message, the frame delay component 740 may be configured as or otherwise support a means for transmitting the message indicating whether the UE is capable of applying a frame delay to the radar waveform.

In some examples, to support transmitting the message, the radar capability component 725 may be configured as or otherwise support a means for transmitting the message indicating a capability to support one or more radar waveform configurations of a set of multiple radar waveform configurations, where the control signaling indicates a first radar waveform configuration including the values for the one or more radar waveform generation parameters of the set of multiple radar waveform configurations.

In some examples, to support transmitting the message, the radar capability component 725 may be configured as or otherwise support a means for transmitting the message indicating the radar waveform generation capability of the UE periodically, based on a geo-location of the UE, or both.

In some examples, the radar capability component 725 may be configured as or otherwise support a means for receiving, from the network entity, a broadcast signal. In some examples, the radar capability component 725 may be configured as or otherwise support a means for transmitting the message to the network entity based on receiving the broadcast signal.

In some examples, the broadcast signal triggers the UE to transmit the message based on the UE entering the geographic control area of the network entity.

In some examples, the waveform parameter updating component 745 may be configured as or otherwise support a means for receiving an indication of one or more updated radar waveform generation parameters. In some examples, the waveform parameter updating component 745 may be configured as or otherwise support a means for transmitting a second radar waveform in accordance with at least the one or more updated radar waveform generation parameters.

In some examples, the radar waveform configuration component 730 may be configured as or otherwise support a means for receiving the control signaling indicating the values for the one or more radar waveform generation parameters periodically, or based on a change to the values for the one or more radar waveform generation parameters common to the group of UEs, or both.

In some examples, the RLF detection component 750 may be configured as or otherwise support a means for initiating a timer based on detecting radio link failure. In some examples, the RLF detection component 750 may be configured as or otherwise support a means for transmitting a second radar waveform using one or more default radar waveform generation parameters based on the timer expiring.

In some examples, the RLF detection component 750 may be configured as or otherwise support a means for initiating a timer based on detecting radio link failure. In some examples, the RLF detection component 750 may be configured as or otherwise support a means for transmitting a second radar waveform using the values for the one or more radar waveform generation parameters based on the timer expiring.

In some examples, the RLF detection component 750 may be configured as or otherwise support a means for transmitting a second radar waveform with a reduced transmit power based on detecting radio link failure.

In some examples, to support receiving the control signaling, the frame delay component 740 may be configured as or otherwise support a means for receiving the control signaling including a frame delay indication for transmitting the radar waveform. In some examples, to support receiving the control signaling, the frame delay component 740 may be configured as or otherwise support a means for transmitting the radar waveform in accordance with the frame delay indication.

In some examples, the coordination request component 755 may be configured as or otherwise support a means for transmitting a request for radar waveform coordination based on detecting an interfering radar waveform, where the control signaling is received in response to the request for radar waveform coordination.

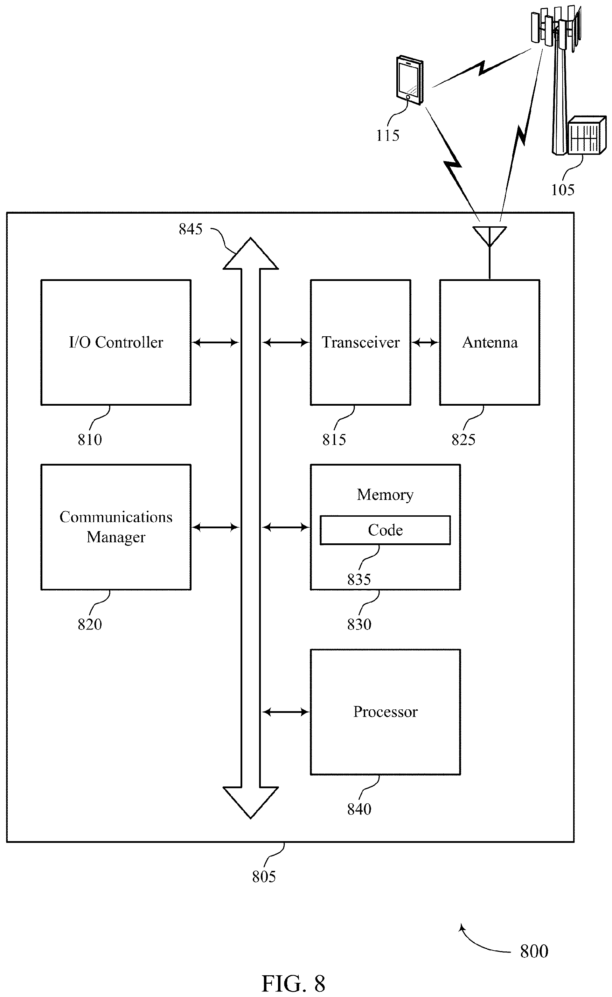

**FIG.** 8 shows a diagram of a system 800 including a device 805 that supports network-assisted coordination for multi-radar interference in accordance with aspects of the present disclosure. The device 805 may be an example of or include the components of a device 505, a device 605, or a UE 115 as described herein. The device 805 may communicate wirelessly with one or more base stations 105, UEs 115, or any combination thereof. The device 805 may include components for bi-directional voice and data communications including components for transmitting and receiving communications, such as a communications manager 820, an input/output (I/O) controller 810, a transceiver 815, an antenna 825, a memory 830, code 835, and a processor 840. These components may be in electronic communication or otherwise coupled (e.g., operatively, communicatively, functionally, electronically, electrically) via one or more buses (e.g., a bus 845).

The I/O controller 810 may manage input and output signals for the device 805. The I/O controller 810 may also manage peripherals not integrated into the device 805. In some cases, the I/O controller 810 may represent a physical connection or port to an external peripheral. In some cases, the I/O controller 810 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 810 may represent or interact with a modem, a keyboard, a mouse, a touchscreen, or a similar device. In some cases, the I/O controller 810 may be implemented as part of a processor, such as the processor 840. In some cases, a user may interact with the device 805 via the I/O controller 810 or via hardware components controlled by the I/O controller 810.

In some cases, the device 805 may include a single antenna 825. However, in some other cases, the device 805 may have more than one antenna 825, which may be capable of concurrently transmitting or receiving multiple wireless transmissions. The transceiver 815 may communicate bi-directionally, via the one or more antennas 825, wired, or wireless links as described herein. For example, the transceiver 815 may represent a wireless transceiver and may communicate bi-directionally with another wireless transceiver. The transceiver 815 may also include a modem to modulate the packets, to provide the modulated packets to one or more antennas 825 for transmission, and to demodulate packets received from the one or more antennas 825. The transceiver 815, or the transceiver 815 and one or more antennas 825, may be an example of a transmitter 515, a transmitter 615, a receiver 510, a receiver 610, or any combination thereof or component thereof, as described herein.

The memory 830 may include random access memory (RAM) and read-only memory (ROM). The memory 830 may store computer-readable, computer-executable code 835 including instructions that, when executed by the processor 840, cause the device 805 to perform various functions described herein. The code 835 may be stored in a non-transitory computer-readable medium such as system memory or another type of memory. In some cases, the code 835 may not be directly executable by the processor 840 but may cause a computer (e.g., when compiled and executed) to perform functions described herein. In some cases, the memory 830 may contain, among other things, a basic I/O system (BIOS) which may control basic hardware or software operation such as the interaction with peripheral components or devices.

The processor 840 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 840 may be configured to operate a memory array using a memory controller. In some other cases, a memory controller may be integrated into the processor 840. The processor 840 may be configured to execute computer-readable instructions stored in a memory (e.g., the memory 830) to cause the device 805 to perform various functions (e.g., functions or tasks supporting network-assisted coordination for multi-radar interference). For example, the device 805 or a component of the device 805 may include a processor 840 and memory 830 coupled to the processor 840, the processor 840 and memory 830 configured to perform various functions described herein.

The communications manager 820 may support wireless communications at a UE in accordance with examples as disclosed herein. For example, the communications manager 820 may be configured as or otherwise support a means for transmitting a message indicating a radar waveform generation capability of the UE. The communications manager 820 may be configured as or otherwise support a means for receiving, from a network entity, control signaling indicating values for one or more radar waveform generation parameters common to a group of UEs including the UE associated with a geographic control area of the network entity in response to transmitting the message indicating the radar waveform generation capability of the UE. The communications manager 820 may be configured as or otherwise support a means for transmitting a radar waveform in accordance with the values for the one or more radar waveform generation parameters.

By including or configuring the communications manager 820 in accordance with examples as described herein, the device 805 may support techniques for improved safety and improved coordination between devices. These techniques may provide devices with common radar waveform configurations to perform coordinated interference, thereby increasing an ability of a device 805 to identify and discard ghost targets when performing radar detection.

In some examples, the communications manager 820 may be configured to perform various operations (e.g., receiving, monitoring, transmitting) using or otherwise in cooperation with the transceiver 815, the one or more antennas 825, or any combination thereof. Although the communications manager 820 is illustrated as a separate component, in some examples, one or more functions described with reference to the communications manager 820 may be supported by or performed by the processor 840, the memory 830, the code 835, or any combination thereof. For example, the code 835 may include instructions executable by the processor 840 to cause the device 805 to perform various aspects of network-assisted coordination for multi-radar interference as described herein, or the processor 840 and the memory 830 may be otherwise configured to perform or support such operations.

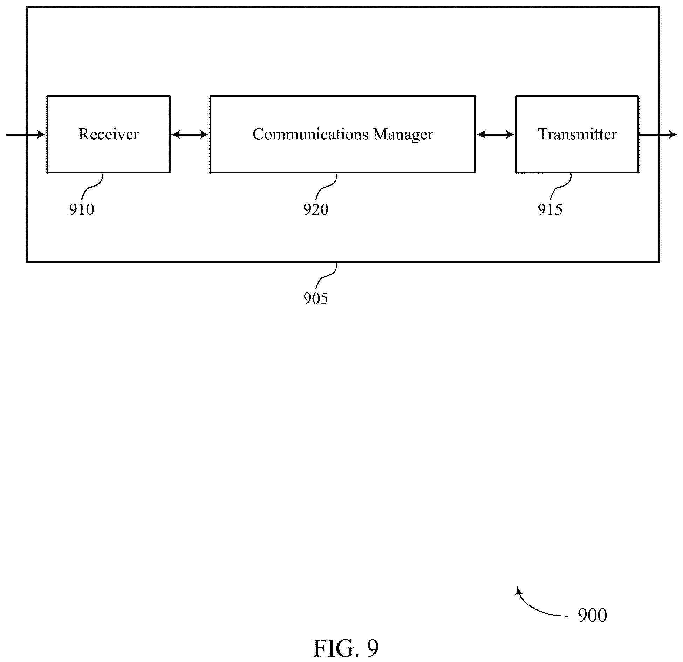

**FIG. 9** shows a block diagram 900 of a device 905 that supports network-assisted coordination for multi-radar interference in accordance with aspects of the present disclosure. The device 905 may be an example of aspects of a base station 105 as described herein. The device 905 may include a receiver 910, a transmitter 915, and a communications manager 920. The device 905 may also include a processor. Each of these components may be in communication with one another (e.g., via one or more buses).

The receiver 910 may provide a means for receiving information such as packets, user data, control information, or any combination thereof associated with various information channels (e.g., control channels, data channels, information channels related to network-assisted coordination for multi-radar interference). Information may be passed on to other components of the device 905. The receiver 910 may utilize a single antenna or a set of multiple antennas.

The transmitter 915 may provide a means for transmitting signals generated by other components of the device 905. For example, the transmitter 915 may transmit information such as packets, user data, control information, or any combination thereof associated with various information channels (e.g., control channels, data channels, information channels related to network-assisted coordination for multi-radar interference). In some examples, the transmitter 915 may be co-located with a receiver 910 in a transceiver module. The transmitter 915 may utilize a single antenna or a set of multiple antennas.

The communications manager 920, the receiver 910, the transmitter 915, or various combinations thereof or various components thereof may be examples of means for performing various aspects of network-assisted coordination for multi-radar interference as described herein. For example, the communications manager 920, the receiver 910, the transmitter 915, or various combinations or components thereof may support a method for performing one or more of the functions described herein.

In some examples, the communications manager 920, the receiver 910, the transmitter 915, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 920, the receiver 910, the transmitter 915, or various combinations or components thereof may be implemented in code (e.g., as communications management software or firmware) executed by a processor. If implemented in code executed by a processor, the functions of the communications manager 920, the receiver 910, the transmitter 915, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 920 may be configured to perform various operations (e.g., receiving, monitoring, transmitting) using or otherwise in cooperation with the receiver 910, the transmitter 915, or both. For example, the communications manager 920 may receive information from the receiver 910, send information to the transmitter 915, or be integrated in combination with the receiver 910, the transmitter 915, or both to receive information, transmit information, or perform various other operations as described herein.

The communications manager 920 may support wireless communications at a network entity in accordance with examples as disclosed herein. For example, the communications manager 920 may be configured as or otherwise support a means for receiving a set of multiple messages from a set of multiple UEs, each message indicating one or more radar waveform generation capabilities of a respective UE of the set of multiple UEs. The communications manager 920 may be configured as or otherwise support a means for selecting values for a set of one or more radar waveform generation parameters that are common to a group of UEs including at least a subset of the set of multiple UEs associated with a geographic control area of the network entity based on the set of multiple messages. The communications manager 920 may be configured as or otherwise support a means for transmitting, to the group of UEs, control signaling indicating the values for the set of one or more radar waveform generation parameters common to the group of UEs.

By including or configuring the communications manager 920 in accordance with examples as described herein, the device 905 (e.g., a processor controlling or otherwise coupled to the receiver 910, the transmitter 915, the communications manager 920, or a combination thereof) may support techniques for more efficient utilization of communication resources.

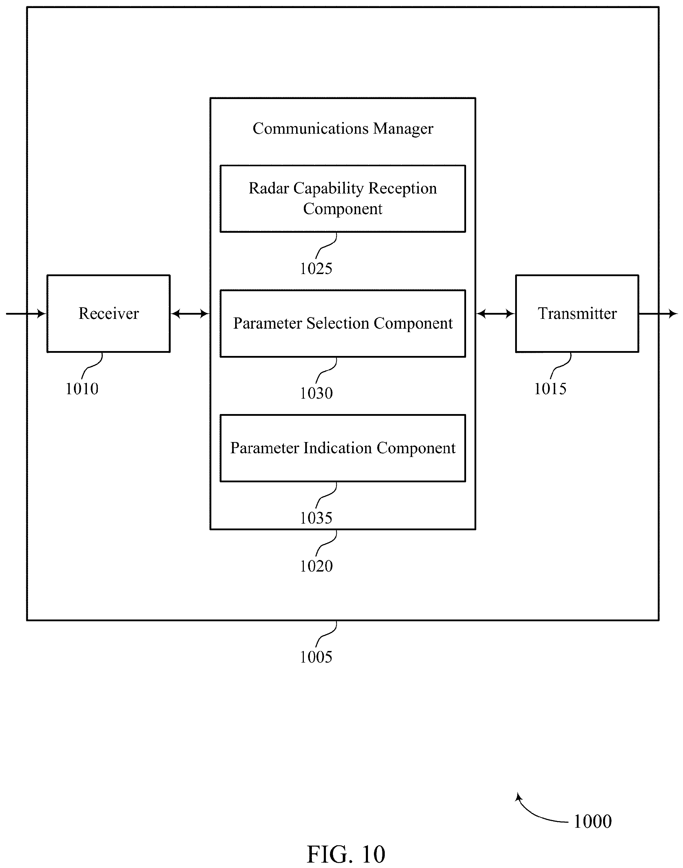

**FIG. 10** shows a block diagram 1000 of a device 1005 that supports network-assisted coordination for multi-radar interference in accordance with aspects of the present disclosure. The device 1005 may be an example of aspects of a device 905 or a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to network-assisted coordination for multi-radar interference). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to network-assisted coordination for multi-radar interference). In some examples, the transmitter 1015 may be co-located with a receiver 1010 in a transceiver module. The transmitter 1015 may utilize a single antenna or a set of multiple antennas.

The device 1005, or various components thereof, may be an example of means for performing various aspects of network-assisted coordination for multi-radar interference as described herein. For example, the communications manager 1020 may include a radar capability reception component 1025, a parameter selection component 1030, a parameter indication component 1035, or any combination thereof. The communications manager 1020 may be an example of aspects of a communications manager 920 as described herein. In some examples, the communications manager 1020, or various components thereof, may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communications at a network entity in accordance with examples as disclosed herein. The radar capability reception component 1025 may be configured as or otherwise support a means for receiving a set of multiple messages from a set of multiple UEs, each message indicating one or more radar waveform generation capabilities of a respective UE of the set of multiple UEs. The parameter selection component 1030 may be configured as or otherwise support a means for selecting values for a set of one or more radar waveform generation parameters that are common to a group of UEs including at least a subset of the set of multiple UEs associated with a geographic control area of the network entity based on the set of multiple messages. The parameter indication component 1035 may be configured as or otherwise support a means for transmitting, to the group of UEs, control signaling indicating the values for the set of one or more radar waveform generation parameters common to the group of UEs.

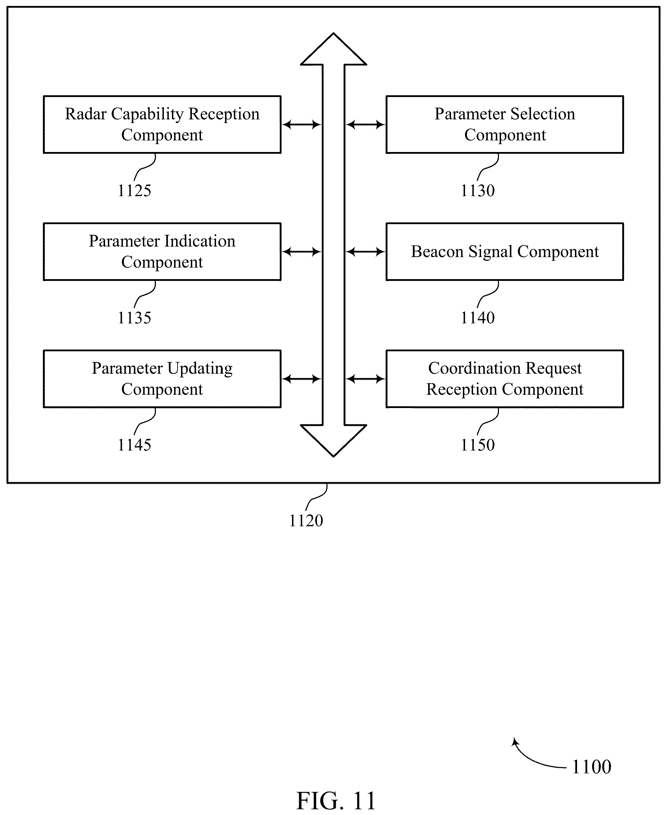

**FIG. 11** shows a block diagram 1100 of a communications manager 1120 that supports network-assisted coordination for multi-radar interference in accordance with aspects of the present disclosure. The communications manager 1120 may be an example of aspects of a communications manager 920, a communications manager 1020, or both, as described herein. The communications manager 1120, or various components thereof, may be an example of means for performing various aspects of network-assisted coordination for multi-radar interference as described herein. For example, the communications manager 1120 may include a radar capability reception component 1125, a parameter selection component 1130, a parameter indication component 1135, a beacon signal component 1140, a parameter updating component 1145, a coordination request reception component 1150, or any combination thereof. Each of these components may communicate, directly or indirectly, with one another (e.g., via one or more buses).

The communications manager 1120 may support wireless communications at a network entity in accordance with examples as disclosed herein. The radar capability reception component 1125 may be configured as or otherwise support a means for receiving a set of multiple messages from a set of multiple UEs, each message indicating one or more radar waveform generation capabilities of a respective UE of the set of multiple UEs. The parameter selection component 1130 may be configured as or otherwise support a means for selecting values for a set of one or more radar waveform generation parameters that are common to a group of UEs including at least a subset of the set of multiple UEs associated with a geographic control area of the network entity based on the set of multiple messages. The parameter indication component 1135 may be configured as or otherwise support a means for transmitting, to the group of UEs, control signaling indicating the values for the set of one or more radar waveform generation parameters common to the group of UEs.

In some examples, to support receiving the set of multiple messages, the radar capability reception component 1125 may be configured as or otherwise support a means for receiving, via a first message of the set of multiple messages, an indication of a capability to support one or more radar waveform configurations of a set of multiple radar waveform configurations, where the control signaling indicates a first radar waveform configuration including the values for the set of one or more radar waveform generation parameters of the set of multiple radar waveform configurations.

In some examples, to support receiving the set of multiple messages, the radar capability reception component 1125 may be configured as or otherwise support a means for receiving the set of multiple messages from the set of multiple UEs periodically, based on respective geo-locations of the set of multiple UEs, or both.

In some examples, the beacon signal component 1140 may be configured as or otherwise support a means for broadcasting a beacon signal associated with the geographic control area of the network entity. In some examples, the radar capability reception component 1125 may be configured as or otherwise support a means for receiving, from a first UE of the set of multiple UEs, a first message of the set of multiple messages indicating that the first UE received the beacon signal.

In some examples, the parameter updating component 1145 may be configured as or otherwise support a means for determining one or more updated radar waveform generation parameters that are common to the group of UEs. In some examples, the parameter updating component 1145 may be configured as or otherwise support a means for transmitting an indication of the one or more updated radar waveform generation parameters to the group of UEs.

In some examples, to support transmitting the control signaling, the parameter indication component 1135 may be configured as or otherwise support a means for transmitting the control signaling indicating the values for the set of one or more radar waveform generation parameters according to a periodicity of the control signaling.

In some examples, to support selecting the values for the set of one or more radar waveform generation parameters, the parameter selection component 1130 may be configured as or otherwise support a means for selecting the values for the set of one or more radar waveform generation parameters based on a capability that is common to each UE in the group of UEs.

In some examples, the parameter selection component 1130 may be configured as or otherwise support a means for identifying a set of multiple sets of radar waveform generation parameters based on the set of multiple messages, where the values for the set of one or more radar waveform generation parameters are selected from the set of multiple sets of radar waveform generation parameters based on a minimum capability of each UE in the group of UEs.

In some examples, the parameter selection component 1130 may be configured as or otherwise support a means for selecting second values for a second set of one or more radar waveform generation parameters that is common to a second group of UEs including at least a second subset of the set of multiple UEs based on the set of multiple messages, where the second group of UEs is different from the group of UEs. In some examples, the parameter indication component 1135 may be configured as or otherwise support a means for transmitting, to the second group of UEs, second control signaling indicating the second values for the second set of one or more radar waveform generation parameters common to the second group of UEs.

In some examples, the group of UEs is associated with a first radar waveform generation capability level, and the second group of UEs is associated with a second radar waveform generation capability level.

In some examples, the parameter indication component 1135 may be configured as or otherwise support a means for transmitting, to each UE of the group of UEs, an indication of a frame delay configuration for transmitting a radar waveform using the values for the set of one or more radar waveform generation parameters.

In some examples, to support transmitting the indication of the frame delay, the parameter indication component 1135 may be configured as or otherwise support a means for transmitting a groupcast message to the group of UEs, where the frame delay configuration for each UE of the group of UEs is indicated based on a respective radar identifier for each UE.

In some examples, the parameter indication component 1135 may be configured as or otherwise support a means for indicating a duration for the group of UEs to apply the values for the set of one or more radar waveform generation parameters common to the group of UEs.

In some examples, the coordination request reception component 1150 may be configured as or otherwise support a means for receiving, from one or more UEs of the set of multiple UEs, a request for radar waveform coordination, where the control signaling is transmitted in response to the request for radar waveform coordination.

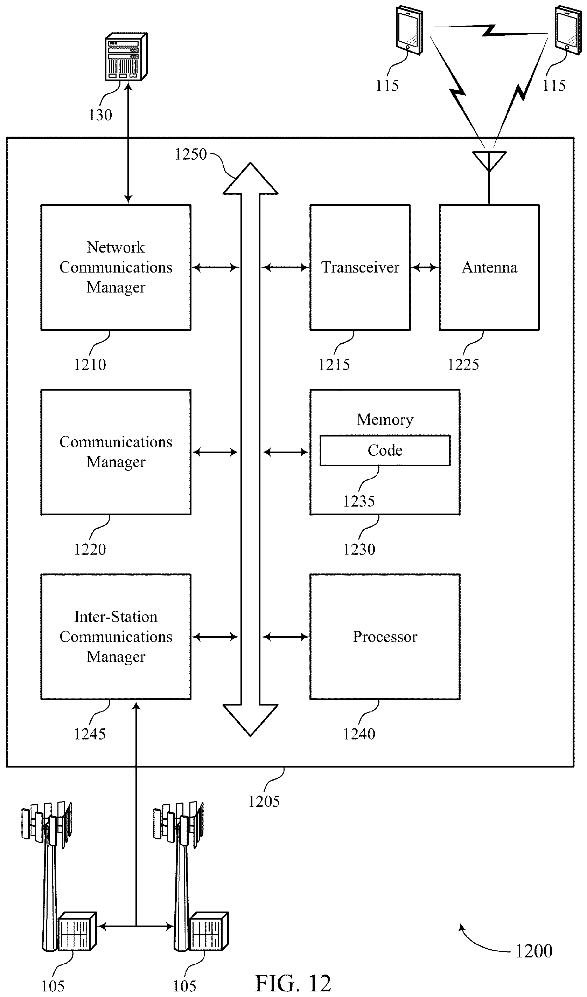

**FIG. 12** shows a diagram of a system 1200 including a device 1205 that supports network-assisted coordination for multi-radar interference in accordance with aspects of the present disclosure. The device 1205 may be an example of or include the components of a device 905, a device 1005, or a base station 105 as described herein. The device 1205 may communicate wirelessly with one or more base stations 105, UEs 115, or any combination thereof. The device 1205 may include components for bi-directional voice and data communications including components for transmitting and receiving communications, such as a communications manager 1220, a network communications manager 1210, a transceiver 1215, an antenna 1225, a memory 1230, code 1235, a processor 1240, and an inter-station communications manager 1245. These components may be in electronic communication or otherwise coupled (e.g., operatively, communicatively, functionally, electronically, electrically) via one or more buses (e.g., a bus 1250).

The network communications manager 1210 may manage communications with a core network 130 (e.g., via one or more wired backhaul links). For example, the network communications manager 1210 may manage the transfer of data communications for client devices, such as one or more UEs 115.

In some cases, the device 1205 may include a single antenna 1225. However, in some other cases the device 1205 may have more than one antenna 1225, which may be capable of concurrently transmitting or receiving multiple wireless transmissions. The transceiver 1215 may communicate bi-directionally, via the one or more antennas 1225, wired, or wireless links as described herein. For example, the transceiver 1215 may represent a wireless transceiver and may communicate bi-directionally with another wireless transceiver. The transceiver 1215 may also include a modem to modulate the packets, to provide the modulated packets to one or more antennas 1225 for transmission, and to demodulate packets received from the one or more antennas 1225. The transceiver 1215, or the transceiver 1215 and one or more antennas 1225, may be an example of a transmitter 915, a transmitter 1015, a receiver 910, a receiver 1010, or any combination thereof or component thereof, as described herein.

The memory 1230 may include RAM and ROM. The memory 1230 may store computer-readable, computer-executable code 1235 including instructions that, when executed by the processor 1240, cause the device 1205 to perform various functions described herein. The code 1235 may be stored in a non-transitory computer-readable medium such as system memory or another type of memory. In some cases, the code 1235 may not be directly executable by the processor 1240 but may cause a computer (e.g., when compiled and executed) to perform functions described herein. In some cases, the memory 1230 may contain, among other things, a BIOS which may control basic hardware or software operation such as the interaction with peripheral components or devices.

The processor 1240 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1240 may be configured to operate a memory array using a memory controller. In some other cases, a memory controller may be integrated into the processor 1240. The processor 1240 may be configured to execute computer-readable instructions stored in a memory (e.g., the memory 1230) to cause the device 1205 to perform various functions (e.g., functions or tasks supporting network-assisted coordination for multi-radar interference). For example, the device 1205 or a component of the device 1205 may include a processor 1240 and memory 1230 coupled to the processor 1240, the processor 1240 and memory 1230 configured to perform various functions described herein.

The inter-station communications manager 1245 may manage communications with other base stations 105, and may include a controller or scheduler for controlling communications with UEs 115 in cooperation with other base stations 105. For example, the inter-station communications manager 1245 may coordinate scheduling for transmissions to UEs 115 for various interference mitigation techniques such as beamforming or joint transmission. In some examples, the inter-station communications manager 1245 may provide an X2 interface within an LTE/LTE-A wireless communications network technology to provide communication between base stations 105.

The communications manager 1220 may support wireless communications at a network entity in accordance with examples as disclosed herein. For example, the communications manager 1220 may be configured as or otherwise support a means for receiving a set of multiple messages from a set of multiple UEs, each message indicating one or more radar waveform generation capabilities of a respective UE of the set of multiple UEs. The communications manager 1220 may be configured as or otherwise support a means for selecting values for a set of one or more radar waveform generation parameters that are common to a group of UEs including at least a subset of the set of multiple UEs associated with a geographic control area of the network entity based on the set of multiple messages. The communications manager 1220 may be configured as or otherwise support a means for transmitting, to the group of UEs, control signaling indicating the values for the set of one or more radar waveform generation parameters common to the group of UEs.

By including or configuring the communications manager 1220 in accordance with examples as described herein, the device 1205 may support techniques for improved coordination between devices. For example, the device 1205 my determine a common radar waveform configuration for other devices to perform coordinated interference, thereby increasing the capability of the devices to detect and discard ghost targets.

In some examples, the communications manager 1220 may be configured to perform various operations (e.g., receiving, monitoring, transmitting) using or otherwise in cooperation with the transceiver 1215, the one or more antennas 1225, or any combination thereof. Although the communications manager 1220 is illustrated as a separate component, in some examples, one or more functions described with reference to the communications manager 1220 may be supported by or performed by the processor 1240, the memory 1230, the code 1235, or any combination thereof. For example, the code 1235 may include instructions executable by the processor 1240 to cause the device 1205 to perform various aspects of network-assisted coordination for multi-radar interference as described herein, or the processor 1240 and the memory 1230 may be otherwise configured to perform or support such operations.

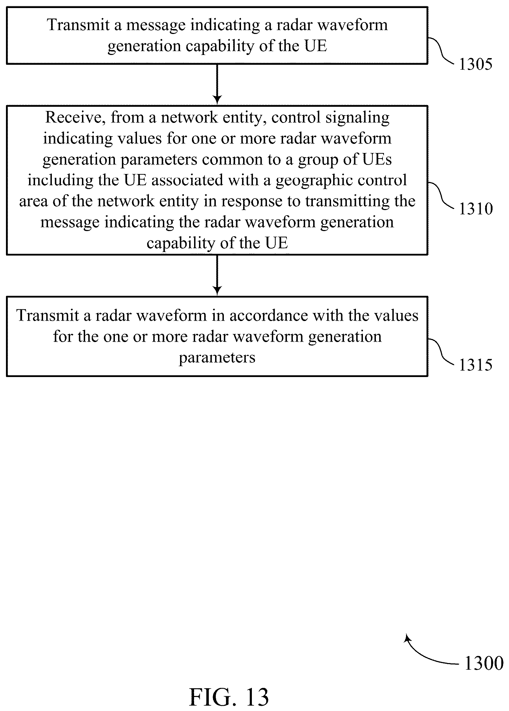

**FIG. 13** shows a flowchart illustrating a method 1300 that supports network-assisted coordination for multi-radar interference in accordance with aspects of the present disclosure. The operations of the method 1300 may be implemented by a UE or its components as described herein. For example, the operations of the method 1300 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1305, the method may include transmitting a message indicating a radar waveform generation capability of the UE. The operations of 1305 may be performed in accordance with examples as disclosed herein. In some examples, aspects of the operations of 1305 may be performed by a radar capability component 725 as described with reference to FIG. 7.

At 1310, the method may include receiving, from a network entity, control signaling indicating values for one or more radar waveform generation parameters common to a group of UEs including the UE associated with a geographic control area of the network entity in response to transmitting the message indicating the radar waveform generation capability of the UE. The operations of 1310 may be performed in accordance with examples as disclosed herein. In some examples, aspects of the operations of 1310 may be performed by a radar waveform configuration component 730 as described with reference to FIG. 7.

At 1315, the method may include transmitting a radar waveform in accordance with the values for the one or more radar waveform generation parameters. The operations of 1315 may be performed in accordance with examples as disclosed herein. In some examples, aspects of the operations of 1315 may be performed by a radar waveform transmission component 735 as described with reference to FIG. 7.

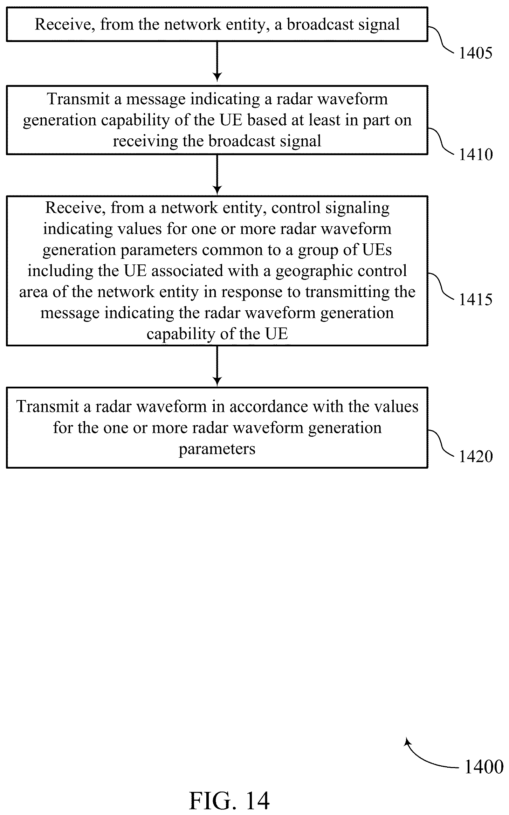

**FIG. 14** shows a flowchart illustrating a method 1400 that supports network-assisted coordination for multi-radar interference in accordance with aspects of the present disclosure. The operations of the method 1400 may be implemented by a UE or its components as described herein. For example, the operations of the method 1400 may be performed by a UE 115 as described with reference to FIGs. 1 through 8. In some examples, a UE may execute a set of instructions to control the functional elements of the UE to perform the described functions. Additionally or alternatively, the UE may perform aspects of the described functions using special-purpose hardware.

At 1405, the method may include receiving, from the network entity, a broadcast signal. The operations of 1405 may be performed in accordance with examples as disclosed herein. In some examples, aspects of the operations of 1405 may be performed by a radar capability component 725 as described with reference to FIG. 7.

At 1410, the method may include transmitting a message indicating a radar waveform generation capability of the UE based at least in part on receiving the broadcast signal. The operations of 1410 may be performed in accordance with examples as disclosed herein. In some examples, aspects of the operations of 1410 may be performed by a radar capability component 725 as described with reference to FIG. 7.

At 1415, the method may include receiving, from a network entity, control signaling indicating values for one or more radar waveform generation parameters common to a group of UEs including the UE associated with a geographic control area of the network entity in response to transmitting the message indicating the radar waveform generation capability of the UE. The operations of 1415 may be performed in accordance with examples as disclosed herein. In some examples, aspects of the operations of 1415 may be performed by a radar waveform configuration component 730 as described with reference to FIG. 7.

At 1420, the method may include transmitting a radar waveform in accordance with the values for the one or more radar waveform generation parameters. The operations of 1420 may be performed in accordance with examples as disclosed herein. In some examples, aspects of the operations of 1420 may be performed by a radar waveform transmission component 735 as described with reference to FIG. 7.

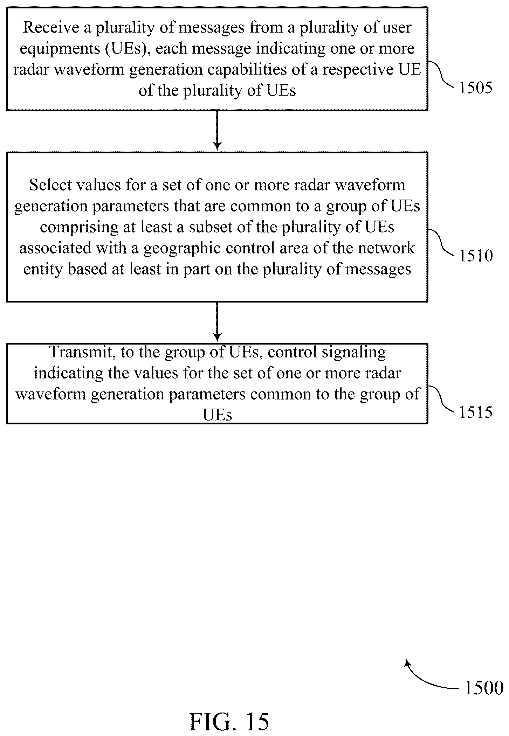

**FIG. 15** shows a flowchart illustrating a method 1500 that supports network-assisted coordination for multi-radar interference in accordance with aspects of the present disclosure. The operations of the method 1500 may be implemented by a base station or its components as described herein. For example, the operations of the method 1500 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1505, the method may include receiving a set of multiple messages from a set of multiple UEs, each message indicating one or more radar waveform generation capabilities of a respective UE of the set of multiple UEs. The operations of 1505 may be performed in accordance with examples as disclosed herein. In some examples, aspects of the operations of 1505 may be performed by a radar capability reception component 1125 as described with reference to FIG. 11.

At 1510, the method may include selecting values for a set of one or more radar waveform generation parameters that are common to a group of UEs including at least a subset of the set of multiple UEs associated with a geographic control area of the network entity based on the set of multiple messages. The operations of 1510 may be performed in accordance with examples as disclosed herein. In some examples, aspects of the operations of 1510 may be performed by a parameter selection component 1130 as described with reference to FIG. 11.

At 1515, the method may include transmitting, to the group of UEs, control signaling indicating the values for the set of one or more radar waveform generation parameters common to the group of UEs. The operations of 1515 may be performed in accordance with examples as disclosed herein. In some examples, aspects of the operations of 1515 may be performed by a parameter indication component 1135 as described with reference to FIG. 11.

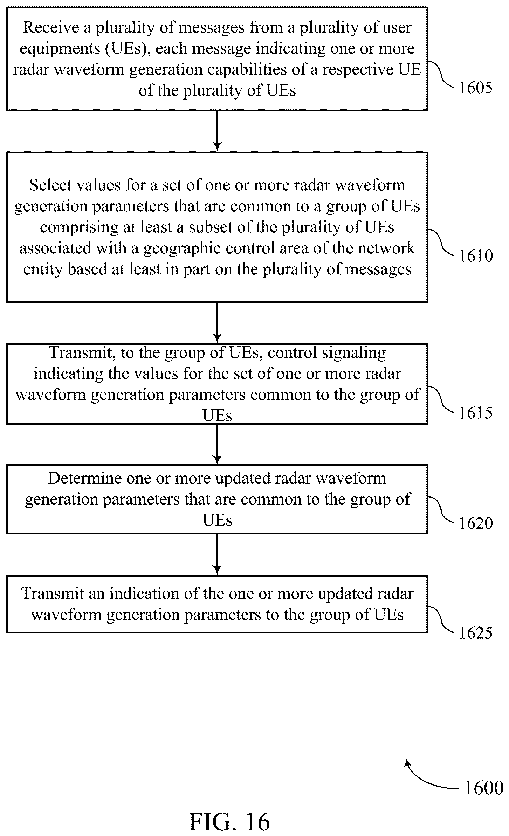

**FIG. 16** shows a flowchart illustrating a method 1600 that supports network-assisted coordination for multi-radar interference in accordance with aspects of the present disclosure. The operations of the method 1600 may be implemented by a base station or its components as described herein. For example, the operations of the method 1600 may be performed by a base station 105 as described with reference to FIGs. 1 through 4 and 9 through 12. In some examples, a base station may execute a set of instructions to control the functional elements of the base station to perform the described functions. Additionally or alternatively, the base station may perform aspects of the described functions using special-purpose hardware.

At 1605, the method may include receiving a set of multiple messages from a set of multiple UEs, each message indicating one or more radar waveform generation capabilities of a respective UE of the set of multiple UEs. The operations of 1605 may be performed in accordance with examples as disclosed herein. In some examples, aspects of the operations of 1605 may be performed by a radar capability reception component 1125 as described with reference to FIG. 11.

At 1610, the method may include selecting values for a set of one or more radar waveform generation parameters that are common to a group of UEs including at least a subset of the set of multiple UEs associated with a geographic control area of the network entity based on the set of multiple messages. The operations of 1610 may be performed in accordance with examples as disclosed herein. In some examples, aspects of the operations of 1610 may be performed by a parameter selection component 1130 as described with reference to FIG. 11.

At 1615, the method may include transmitting, to the group of UEs, control signaling indicating the values for the set of one or more radar waveform generation parameters common to the group of UEs. The operations of 1615 may be performed in accordance with examples as disclosed herein. In some examples, aspects of the operations of 1615 may be performed by a parameter indication component 1135 as described with reference to FIG. 11.

At 1620, the method may include determining one or more updated radar waveform generation parameters that are common to the group of UEs. The operations of 1620 may be performed in accordance with examples as disclosed herein. In some examples, aspects of the operations of 1620 may be performed by a parameter updating component 1145 as described with reference to FIG. 11.

At 1625, the method may include transmitting an indication of the one or more updated radar waveform generation parameters to the group of UEs. The operations of 1625 may be performed in accordance with examples as disclosed herein. In some examples, aspects of the operations of 1625 may be performed by a parameter updating component 1145 as described with reference to FIG. 11.

The following provides an overview of aspects of the present disclosure:
Aspect 1: A method for wireless communications at a UE, comprising: transmitting a message indicating a radar waveform generation capability of the UE; receiving, from a network entity, control signaling indicating values for one or more radar waveform generation parameters common to a group of UEs including the UE associated with a geographic control area of the network entity in response to transmitting the message indicating the radar waveform generation capability of the UE; and transmitting a radar waveform in accordance with the values for the one or more radar waveform generation parameters.
Aspect 2: The method of aspect 1, wherein transmitting the message comprises: transmitting the message indicating values for a set of radar waveform generation capabilities supported by the UE, wherein the control signaling indicates the values for the one or more radar waveform generation parameters common to the group of UEs based at least in part on the values for the set of radar waveform generation capabilities.
Aspect 3: The method of any of aspects 1 through 2, wherein transmitting the message comprises: transmitting the message indicating whether the UE is capable of applying a frame delay to the radar waveform.
Aspect 4: The method of any of aspects 1 through 3, wherein transmitting the message comprises: transmitting the message indicating a capability to support one or more radar waveform configurations of a plurality of radar waveform configurations, wherein the control signaling indicates a first radar waveform configuration comprising the values for the one or more radar waveform generation parameters of the plurality of radar waveform configurations.
Aspect 5: The method of any of aspects 1 through 4, wherein transmitting the message comprises: transmitting the message indicating the radar waveform generation capability of the UE periodically, based at least in part on a geo-location of the UE, or both.
Aspect 6: The method of any of aspects 1 through 5, further comprising: receiving, from the network entity, a broadcast signal; and transmitting the message to the network entity based at least in part on receiving the broadcast signal.
Aspect 7: The method of aspect 6, wherein the broadcast signal triggers the UE to transmit the message based at least in part on the UE entering the geographic control area of the network entity.
Aspect 8: The method of any of aspects 1 through 7, further comprising: receiving an indication of one or more updated radar waveform generation parameters; and transmitting a second radar waveform in accordance with at least the one or more updated radar waveform generation parameters.
Aspect 9: The method of any of aspects 1 through 8, further comprising: receiving the control signaling indicating the values for the one or more radar waveform generation parameters periodically, or based at least in part on a change to the values for the one or more radar waveform generation parameters common to the group of UEs, or both.
Aspect 10: The method of any of aspects 1 through 9, further comprising: initiating a timer based at least in part on detecting radio link failure; and transmitting a second radar waveform using one or more default radar waveform generation parameters based at least in part on the timer expiring.
Aspect 11: The method of any of aspects 1 through 10, further comprising: initiating a timer based at least in part on detecting radio link failure; and transmitting a second radar waveform using the values for the one or more radar waveform generation parameters based at least in part on the timer expiring.
Aspect 12: The method of any of aspects 1 through 11, further comprising: transmitting a second radar waveform with a reduced transmit power based at least in part on detecting radio link failure.
Aspect 13: The method of any of aspects 1 through 12, wherein receiving the control signaling comprises: receiving the control signaling comprising a frame delay indication for transmitting the radar waveform; and transmitting the radar waveform in accordance with the frame delay indication.
Aspect 14: The method of any of aspects 1 through 13, further comprising: transmitting a request for radar waveform coordination based at least in part on detecting an interfering radar waveform, wherein the control signaling is received in response to the request for radar waveform coordination.
Aspect 15: A method for wireless communications at a network entity, comprising: receiving a plurality of messages from a plurality of UEs, each message indicating one or more radar waveform generation capabilities of a respective UE of the plurality of UEs; selecting values for a set of one or more radar waveform generation parameters that are common to a group of UEs comprising at least a subset of the plurality of UEs associated with a geographic control area of the network entity based at least in part on the plurality of messages; and transmitting, to the group of UEs, control signaling indicating the values for the set of one or more radar waveform generation parameters common to the group of UEs.
Aspect 16: The method of aspect 15, wherein receiving the plurality of messages comprises: receiving, via a first message of the plurality of messages, an indication of a capability to support one or more radar waveform configurations of a plurality of radar waveform configurations, wherein the control signaling indicates a first radar waveform configuration comprising the values for the set of one or more radar waveform generation parameters of the plurality of radar waveform configurations.
Aspect 17: The method of any of aspects 15 through 16, wherein receiving the plurality of messages comprises: receiving the plurality of messages from the plurality of UEs periodically, based at least in part on respective geo-locations of the plurality of UEs, or both.
Aspect 18: The method of any of aspects 15 through 17, further comprising: broadcasting a beacon signal associated with the geographic control area of the network entity; and receiving, from a first UE of the plurality of UEs, a first message of the plurality of messages indicating that the first UE received the beacon signal.
Aspect 19: The method of any of aspects 15 through 18, further comprising: determining one or more updated radar waveform generation parameters that are common to the group of UEs; and transmitting an indication of the one or more updated radar waveform generation parameters to the group of UEs.
Aspect 20: The method of any of aspects 15 through 19, wherein transmitting the control signaling comprises: transmitting the control signaling indicating the values for the set of one or more radar waveform generation parameters according to a periodicity of the control signaling.
Aspect 21: The method of any of aspects 15 through 20, wherein selecting the values for the set of one or more radar waveform generation parameters comprises: selecting the values for the set of one or more radar waveform generation parameters based at least in part on a capability that is common to each UE in the group of UEs.
Aspect 22: The method of any of aspects 15 through 21, further comprising: identifying a plurality of sets of radar waveform generation parameters based at least in part on the plurality of messages, wherein the values for the set of one or more radar waveform generation parameters are selected from the plurality of sets of radar waveform generation parameters based at least in part on a minimum capability of each UE in the group of UEs.
Aspect 23: The method of any of aspects 15 through 22, further comprising: selecting second values for a second set of one or more radar waveform generation parameters that is common to a second group of UEs comprising at least a second subset of the plurality of UEs based at least in part on the plurality of messages, wherein the second group of UEs is different from the group of UEs; and transmitting, to the second group of UEs, second control signaling indicating the second values for the second set of one or more radar waveform generation parameters common to the second group of UEs.
Aspect 24: The method of aspect 23, wherein the group of UEs is associated with a first radar waveform generation capability level, and the second group of UEs is associated with a second radar waveform generation capability level.
Aspect 25: The method of any of aspects 15 through 24, further comprising: transmitting, to each UE of the group of UEs, an indication of a frame delay configuration for transmitting a radar waveform using the values for the set of one or more radar waveform generation parameters.
Aspect 26: The method of aspect 25, wherein transmitting the indication of the frame delay comprises: transmitting a groupcast message to the group of UEs, wherein the frame delay configuration for each UE of the group of UEs is indicated based at least in part on a respective radar identifier for each UE.
Aspect 27: The method of any of aspects 15 through 26, further comprising: indicating a duration for the group of UEs to apply the values for the set of one or more radar waveform generation parameters common to the group of UEs.
Aspect 28: The method of any of aspects 15 through 27, further comprising: receiving, from one or more UEs of the plurality of UEs, a request for radar waveform coordination, wherein the control signaling is transmitted in response to the request for radar waveform coordination.
Aspect 29: An apparatus for wireless communications at a UE, comprising a processor; memory coupled with the processor; and instructions stored in the memory and executable by the processor to cause the apparatus to perform a method of any of aspects 1 through 14.
Aspect 30: An apparatus for wireless communications at a UE, comprising at least one means for performing a method of any of aspects 1 through 14.
Aspect 31: A non-transitory computer-readable medium storing code for wireless communications at a UE, the code comprising instructions executable by a processor to perform a method of any of aspects 1 through 14.
Aspect 32: An apparatus for wireless communications at a network entity, comprising a processor; memory coupled with the processor; and instructions stored in the memory and executable by the processor to cause the apparatus to perform a method of any of aspects 15 through 28.
Aspect 33: An apparatus for wireless communications at a network entity, comprising at least one means for performing a method of any of aspects 15 through 28.
Aspect 34: A non-transitory computer-readable medium storing code for wireless communications at a network entity, the code comprising instructions executable by a processor to perform a method of any of aspects 15 through 28.

It should be noted that the methods described herein describe possible implementations, and that the operations and the steps may be rearranged or otherwise modified and that other implementations are possible. Further, aspects from two or more of the methods may be combined.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure.

## Claims

1. An apparatus for wireless communications at a user equipment, UE, comprising:
a processor;
memory coupled with the processor; and
instructions stored in the memory and executable by the processor to cause the apparatus to:
transmit (1305; 1410) a message indicating a frequency-modulated continuous wave, FMCW, radar waveform generation capability of the UE, the message indicating whether the UE is capable of applying a frame delay to the FMCW radar waveform;
receive (1310; 1415), from a network entity, control signaling indicating values for one or more radar waveform generation parameters common to a group of UEs including the UE associated with a geographic control area of the network entity in response to transmitting the message indicating the radar waveform generation capability of the UE, wherein the control signaling comprises a frame delay indication for transmitting the radar waveform; and
transmit (1315; 1420) a FMCW radar waveform in accordance with the values for the one or more radar waveform generation parameters and with the frame delay indication.

2. The apparatus of claim 1, wherein the instructions to transmit the message are executable by the processor to cause the apparatus to:
transmit the message indicating values for a set of radar waveform generation capabilities supported by the UE, wherein the control signaling indicates the values for the one or more radar waveform generation parameters common to the group of UEs based at least in part on the values for the set of radar waveform generation capabilities and/or
transmit the message indicating a capability to support one or more radar waveform configurations of a plurality of radar waveform configurations, wherein the control signaling indicates a first radar waveform configuration comprising the values for the one or more radar waveform generation parameters of the plurality of radar waveform configurations.

3. The apparatus of claim 1, wherein the instructions to transmit the message are executable by the processor to cause the apparatus to:
transmit the message indicating the radar waveform generation capability of the UE periodically, based at least in part on a geo-location of the UE, or both.

4. The apparatus of claim 1, wherein the instructions are further executable by the processor to cause the apparatus to:
receive (1405), from the network entity, a broadcast signal; and
transmit (1410) the message to the network entity based at least in part on receiving the broadcast signal, and optionally wherein the broadcast signal triggers the UE to transmit the message based at least in part on the UE entering the geographic control area of the network entity.

5. The apparatus of claim 1, wherein the instructions are further executable by the processor to cause the apparatus to:
receive an indication of one or more updated radar waveform generation parameters; and
transmit a second radar waveform in accordance with at least the one or more updated radar waveform generation parameters, and/or
wherein the instructions are further executable by the processor to cause the apparatus to:
receive the control signaling indicating the values for the one or more radar waveform generation parameters periodically, or based at least in part on a change to the values for the one or more radar waveform generation parameters common to the group of UEs, or both.

6. The apparatus of claim 1, wherein the instructions are further executable by the processor to cause the apparatus to:
initiate a timer based at least in part on detecting radio link failure; and
transmit a second radar waveform using one or more default radar waveform generation parameters or the values for the one or more radar waveform generation parameters, based at least in part on the timer expiring and/or
transmit a second radar waveform with a reduced transmit power based at least in part on detecting radio link failure.

7. The apparatus of claim 1, wherein the instructions are further executable by the processor to cause the apparatus to:
transmit a request for radar waveform coordination based at least in part on detecting an interfering radar waveform, wherein the control signaling is received in response to the request for radar waveform coordination.

8. An apparatus for wireless communications at a network entity, comprising:
a processor;
memory coupled with the processor; and
instructions stored in the memory and executable by the processor to cause the apparatus to:
receive (1505; 1605) a plurality of messages from a plurality of user equipments, UEs, each message indicating one or more frequency-modulated continuous wave, FMCW, radar waveform generation capabilities of a respective UE of the plurality of UEs;
select (1510; 1610) values for a set of one or more FMCW radar waveform generation parameters that are common to a group of UEs comprising at least a subset of the plurality of UEs associated with a geographic control area of the network entity based at least in part on the plurality of messages;
transmit (1515; 1615), to the group of UEs, control signaling indicating the values for the set of one or more FMCW radar waveform generation parameters common to the group of UEs; and
transmit, to each UE of the group of UEs, an indication of a frame delay configuration for transmitting a FMCW radar waveform using the values for the set of one or more radar waveform generation parameters.

9. The apparatus of claim 8, wherein the instructions to receive the plurality of messages are executable by the processor to cause the apparatus to:
receive, via a first message of the plurality of messages, an indication of a capability to support one or more radar waveform configurations of a plurality of radar waveform configurations, wherein the control signaling indicates a first radar waveform configuration comprising the values for the set of one or more radar waveform generation parameters of the plurality of radar waveform configurations; and/or wherein the instructions to receive the plurality of message are executable by the processor to cause the apparatus to:
receive the plurality of messages from the plurality of UEs periodically, based at least in part on respective geo-locations of the plurality of UEs, or both; and/or
wherein the instructions are further executable by the processor to cause the apparatus to:
broadcast a beacon signal associated with the geographic control area of the network entity; and
receive, from a first UE of the plurality of UEs, a first message of the plurality of messages indicating that the first UE received the beacon signal; and/or
wherein the instructions are further executable by the processor to cause the apparatus to:
determine (1620) one or more updated radar waveform generation parameters that are common to the group of UEs; and
transmit (1625) an indication of the one or more updated radar waveform generation parameters to the group of UEs.

10. The apparatus of claim 8, wherein the instructions to transmit the control signaling are executable by the processor to cause the apparatus to:
transmit the control signaling indicating the values for the set of one or more radar waveform generation parameters according to a periodicity of the control signaling; and/or
wherein the instructions to select the values for the set of one or more radar waveform generation parameters are executable by the processor to cause the apparatus to:
select the values for the set of one or more radar waveform generation parameters based at least in part on a capability that is common to each UE in the group of UEs; and/or
wherein the instructions are further executable by the processor to cause the apparatus to:
identify a plurality of sets of radar waveform generation parameters based at least in part on the plurality of messages, wherein the values for the set of one or more radar waveform generation parameters are selected from the plurality of sets of radar waveform generation parameters based at least in part on a minimum capability of each UE in the group of UEs.

11. The apparatus of claim 8, wherein the instructions are further executable by the processor to cause the apparatus to:
select second values for a second set of one or more radar waveform generation parameters that is common to a second group of UEs comprising at least a second subset of the plurality of UEs based at least in part on the plurality of messages, wherein the second group of UEs is different from the group of UEs; and
transmit, to the second group of UEs, second control signaling indicating the second values for the second set of one or more radar waveform generation parameters common to the second group of UEs, and optionally wherein the group of UEs is associated with a first radar waveform generation capability level, and the second group of UEs is associated with a second radar waveform generation capability level.

12. The apparatus of claim 8, wherein the instructions to transmit the indication of the frame delay are executable by the processor to cause the apparatus to:
transmit a groupcast message to the group of UEs, wherein the frame delay configuration for each UE of the group of UEs is indicated based at least in part on a respective radar identifier for each UE.

13. The apparatus of claim 8, wherein the instructions are further executable by the processor to cause the apparatus to:
indicate a duration for the group of UEs to apply the values for the set of one or more radar waveform generation parameters common to the group of UEs; and/or
receive, from one or more UEs of the plurality of UEs, a request for radar waveform coordination, wherein the control signaling is transmitted in response to the request for radar waveform coordination.

14. A method for wireless communications at a user equipment, UE, comprising:
transmitting (1305; 1410) a message indicating a frequency-modulated continuous wave, FMCW, radar waveform generation capability of the UE, the message indicating whether the UE is capable of applying a frame delay to the FMCW radar waveform;
receiving (1310; 1415)), from a network entity, control signaling indicating values for one or more radar waveform generation parameters common to a group of UEs including the UE associated with a geographic control area of the network entity in response to transmitting the message indicating the radar waveform generation capability of the UE, wherein the control signaling comprises a frame delay indication for transmitting the radar waveform; and
transmitting (1315; 1420) a radar waveform in accordance with the values for the one or more radar waveform generation parameters and with the frame delay indication.

15. A method for wireless communications at a network entity, comprising:
receiving (1505; 1605) a plurality of messages from a plurality of user equipments, UEs, each message indicating one or more frequency-modulated continuous wave, FMCW, radar waveform generation capabilities of a respective UE of the plurality of UEs;
selecting (1510; 1610) values for a set of one or more FMCW radar waveform generation parameters that are common to a group of UEs comprising at least a subset of the plurality of UEs associated with a geographic control area of the network entity based at least in part on the plurality of messages;
transmitting (1515; 1615), to the group of UEs, control signaling indicating the values for the set of one or more FMCW radar waveform generation parameters common to the group of UEs; and
transmitting, to each UE of the group of UEs, an indication of a frame delay configuration for transmitting a FMCW radar waveform using the values for the set of one or more radar waveform generation parameters.
